# EUROPEAN PATENT APPLICATION

(11) **EP 1 418 762 A1**
(43) Date of publication of application: **12.05.2004**
(21) Application number: 03723391.3
(22) Date of filing: 16.05.2003
(51) Int. Cl.: H04N 7/32

(54) **MOVING IMAGE ENCODING METHOD, MOVING IMAGE DECODING METHOD, AND DATA RECORDING MEDIUM**

(30) Priority: 22.05.2002 JP 2002148218
(71) Applicant: MATSUSHITA ELECTRIC INDUSTRIAL CO., LTD., Kadoma-shi, Osaka 571-8501 (JP)
(72) Inventor: ABE, Kiyofumi, Kadoma-shi, Osaka 571-0074 (JP); KADONO, Shinya, Nishinomiya-shi, Hyogo 663-8113 (JP); KONDO, Satoshi, Yawata-shi, Kyoto 614-8361 (JP); HAGAI, Makoto, Moriguchi-shi, Osaka 570-0051 (JP)
(74) Representative: Eisenführ, Speiser & Partner
(86) International application number: PCT/JP2003/006092
(87) International publication number: WO 2003/098939

(57) **Abstract**

A method for realizing a direct mode without reference to temporally subsequent pictures but with reference to motion vectors of coded blocks in one picture including a current block is suggested for performing predictive coding on the current block using the direct mode under the environment where such temporally subsequent pictures are not available for reference, and further, high coding efficiency is achieved even in a case of motion compensation with only forward reference by eliminating items concerning reference to the subsequent pictures from a table of coding modes and thus reducing the number of items in the table.

## Description

### Technical Field

The present invention relates to methods for coding and decoding moving pictures, and particularly to a predictive coding method and a predictive decoding method of B-pictures which are predictively coded with reference to a plurality of temporally preceding or subsequent coded pictures.

### Background Art

Generally in moving picture coding, information amount is compressed by suppressing the spatial and temporal redundancies that exist within moving pictures. In inter picture predictive coding as a method of suppressing the temporal redundancies, pictures temporally preceding or subsequent to a current picture are used as reference pictures. Motion estimation and motion compensation are performed per block to generate a predictive picture, and a difference between the predictive picture and the current picture is coded.

In H.26L that is a moving picture coding method which is now being developed for standardization, the following three types of pictures are suggested: I-pictures which are coded based on only intra picture prediction; P-pictures which are coded based on inter picture prediction with reference to one temporally preceding picture; and B-pictures which are coded based on inter picture prediction with reference to two temporally preceding pictures, two temporally subsequent pictures, or one preceding and one subsequent pictures. In the coding methods used before H.26L, namely, MPEG (Motion Picture Experts Group) 1, MPEG 2 and MPEG 4, a B-picture can refer to only one picture in one direction, but H.26L is modified so that a B-picture can refer to two pictures in one direction, which is the major feature of H.26L.

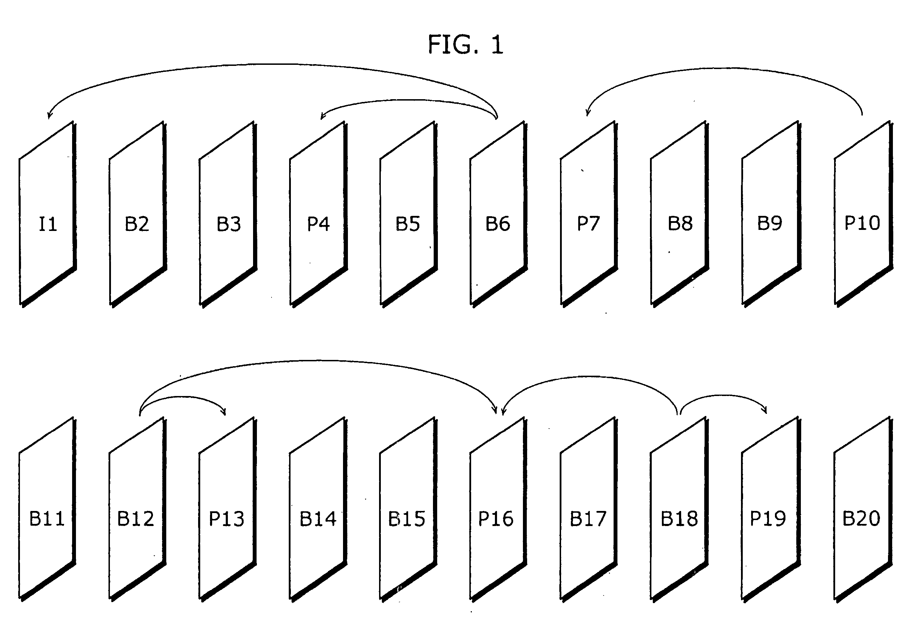

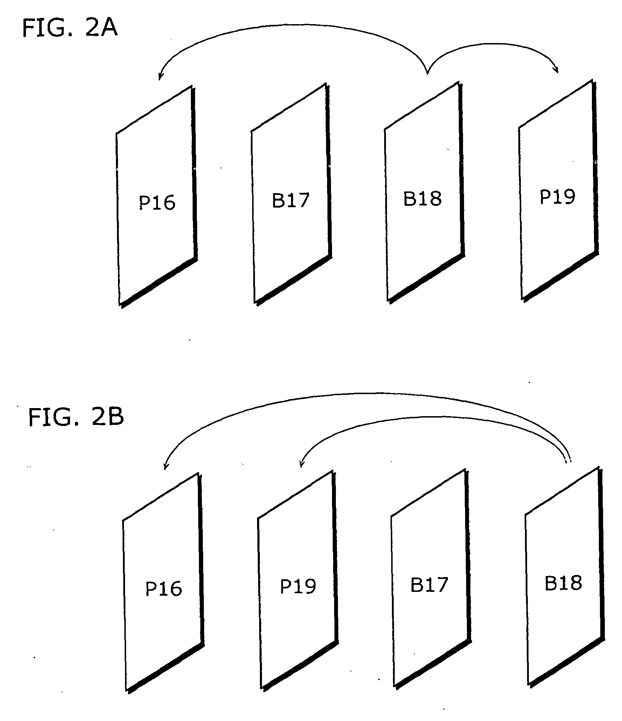

FIG. 1 shows an example of reference relationship between respective pictures and their reference pictures in the conventional moving picture coding method. In this figure, pictures I1∼B20 are displayed in this order. FIG. 2A is a diagram showing the picture B18 and its neighboring pictures in display order extracted from FIG. 1. FIG. 2B is a diagram showing coding order of the picture B18 and its neighboring pictures when coding the picture B18 based on the reference relationship as shown in FIG. 2A.

The picture I1 is coded based on intra picture prediction without reference to any pictures, and the picture P10 is coded based on inter picture prediction with reference to the temporally preceding picture P7. The picture B6 is coded based on inter picture prediction with reference to two temporally preceding pictures (the picture I1 and the picture P4), the picture B12 is coded with reference to two temporally subsequent pictures (the picture P13 and the picture P16), and the picture B18 is coded with reference to one temporally preceding picture and one temporally subsequent picture (the picture P16 and the picture P19), respectively. As mentioned above, since B-pictures may be coded with reference to temporally subsequent pictures, they cannot be coded in display order. In other words, for coding a B-picture like the picture B18 in FIG. 2A, the picture P19 referred to by the picture B18 needs to be coded previously. Therefore, the pictures P16∼ P19 must be reordered as shown in FIG. 2B for coding them.

There is a skip mode as a prediction mode for P-pictures which are coded based on inter picture prediction with reference to one temporally preceding picture. In skip mode, a current block to be coded itself has no motion vector information, but a motion vector used for motion compensation of the current block is determined with reference to motion vectors of neighboring coded blocks, and a predictive picture is generated from a P-picture which temporally immediately precedes a picture including the current block for motion compensation.

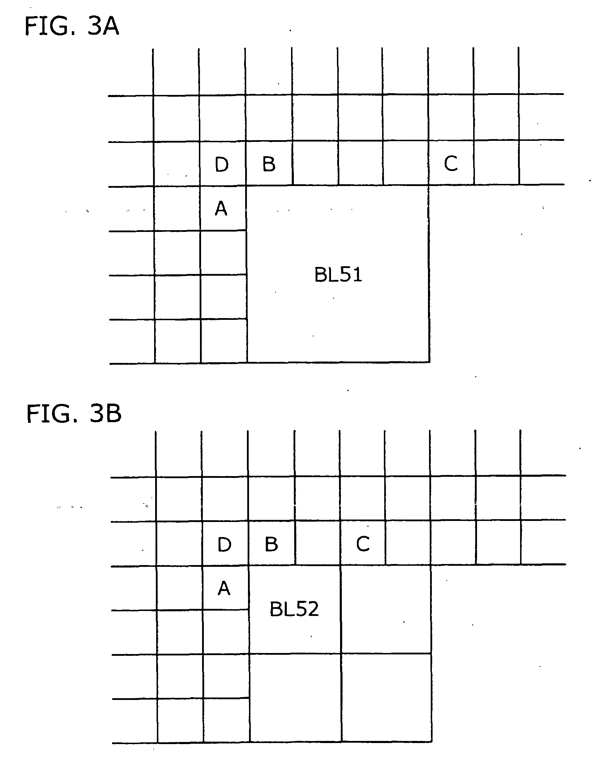

FIG. 3 is a diagram showing positional relationship of a current block and coded neighboring blocks located around the current block in one picture in a case where the motion vectors of the neighboring blocks are referred to. FIG. 3A is an example where a current block to be coded BL51 is 16 × 16 pixels in size, and FIG. 3B is an example where a current block to be coded BL52 is 8 × 8 pixels in size. The positional relationship of a current block to be coded and coded blocks having motion vectors to be referred to in skip mode for a P-picture is shown here. The block BL51 is a block of 16 × 16 pixels which is to be coded in skip mode and refers to motion vectors of three coded blocks located in the positions A, B and C basically (hereinafter a block located in the position A is called a block A, a block located in the position B is called a block B and a block located in the position C is called a block C). However, the motion vectors are not referred to when the following rules are satisfied, but motion compensation is performed in direct mode with reference to the immediately preceding P-picture by considering the value of the motion vector of the current block as "0":
1. The block A or the block B is located outside a picture or a slice including the current block.
2. The block A or the block B has a motion vector of a value "0" which refers to the immediately preceding picture.

A motion vector which is actually used for direct mode is determined by extracting only the motion vectors referring to the immediately preceding P-picture from among the motion vectors of the three blocks A, B and C used for reference and then calculating the median of the extracted motion vectors. However, when the block C is not available for reference, the motion vector for the block D shall be used instead.

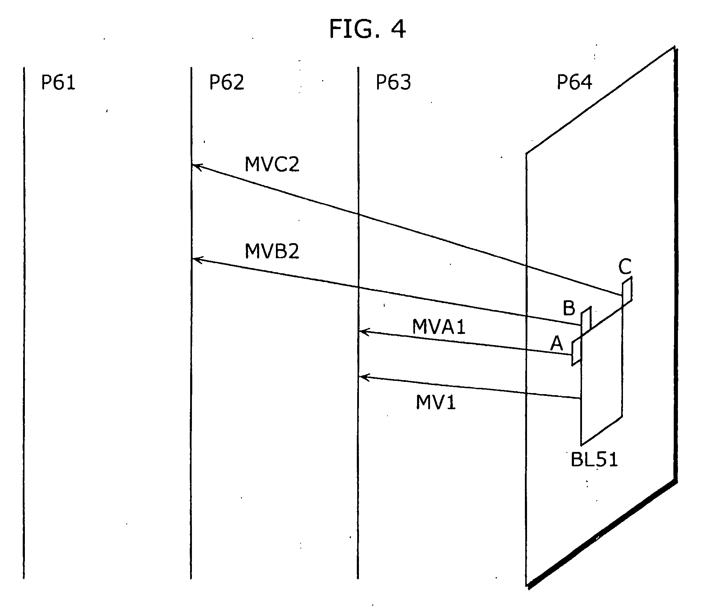

FIG. 4 is a diagram showing an example of motion vectors which are referred to for coding a P-picture in skip mode and coded pictures which are referred to by the motion vectors. The block BL51 belonging to a picture P64 is assumed to be a current block to be coded. In this example, only a motion vector MVA1 refers to the immediately preceding picture, and thus the value of the motion vector MVA1 is used as it is for a motion vector MV1 used in direct mode. Since motion vectors do not need to be coded using the above reference method, a bit amount of a coded stream to be outputted can be reduced. Also, since a motion vector is determined with reference to neighboring blocks, the dramatic effect of this method can be obtained particularly when an object to be shot moves in one direction due to the influence of camera panning or the like.

In direct mode as one of the prediction modes for B-pictures, inter picture predictive coding is performed with reference to two temporally preceding pictures, two temporally subsequent pictures or one temporally preceding and one temporally subsequent pictures. In direct mode, a current block to be coded itself has no motion vector, but two motion vectors used for actual motion compensation of the current block are calculated with reference to a motion vector of a co-located block in a coded picture which is temporally immediately subsequent to the current picture so as to create a predictive picture.

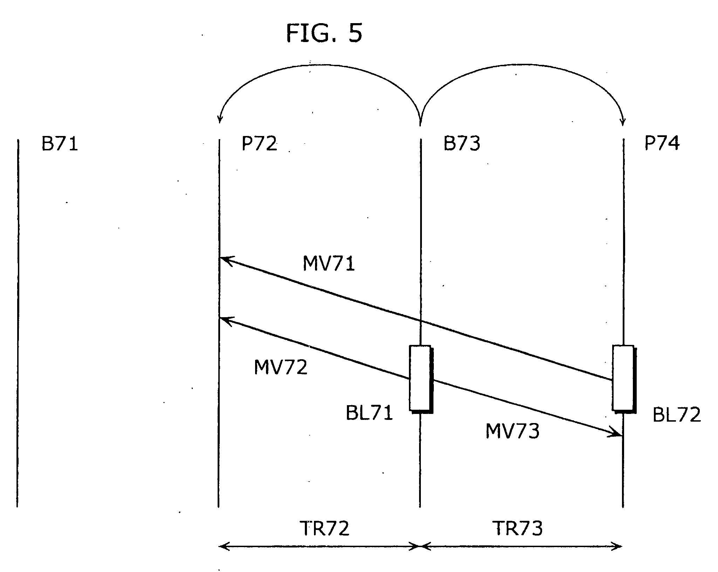

FIG. 5 is a diagram for explaining a method for determining a motion vector in direct mode. A picture B73 is a current B-picture to be coded, and the picture B73 is coded based on bi-prediction in direct mode using pictures P72 and P74 as reference pictures. When a current block to be coded is a block BL71, two motion vectors required for the coding are determined using a motion vector MV71 of a co-located block BL72 in the picture P74 that is a coded subsequent reference picture. The two motion vectors MV72 and MV73 used in direct mode are calculated by applying scaling to the motion vector MV71 using picture distances TR72 and TR73, or by multiplying the motion vector MV71 by predetermined coefficients. A predictive image necessary for coding the block BL71 is generated by averaging the pixel values of the two reference images specified by these two motion vectors. As mentioned above, no motion vector needs to be coded for coding a block to be coded in direct mode, and thus a bit amount of a coded stream to be outputted can be reduced (Joint Video Team (JVT) of ISO/IEC MPEG and ITU-T VCEG -- Joint Committee Draft (2002-5-10) P.99 11 B pictures).

However, since B-pictures in a moving picture are coded with reference to temporally subsequent pictures in direct mode, the pictures which may be referred to need to be coded before a current picture to be coded. Therefore, B-pictures cannot be coded using. direct mode under the environment where temporally subsequent pictures cannot be coded and decoded previously.

The present invention aims at solving the above problem, and the first object thereof is to suggest a method which allows use of B-pictures, particularly, use of a direct mode for the B-pictures, without contradiction even under the environment where temporally subsequent pictures have not yet been coded and decoded before a current picture to be coded or a current picture to be decoded. Further, the second object of the present invention is to suggest methods for coding and decoding moving pictures with high efficiency using B-pictures by suggesting an efficient method for reference of a table in which coding modes and their identification numbers are associated with each other.

### Disclosure of Invention

In order to achieve the above-mentioned objects, the moving picture coding method according to the present invention is a moving picture coding method for coding a moving picture to generate a coded stream, comprising a coding step of allowing use of a direct mode for coding a B-picture which is predictively coded with reference to a plurality of temporally preceding or subsequent coded pictures, the direct mode being a mode for performing motion compensation of a current block to be coded with reference to motion vectors of coded blocks, wherein the coding step includes a motion compensation step of performing motion compensation, as in the direct mode, with reference to the motion vectors of the coded blocks located around the current block to be coded in one picture, when the B-picture is predictively coded with reference only to the coded pictures located in one direction, in display order, of the picture including the current block to be coded.

Also, the moving picture coding method according to the present invention is a moving picture coding method for coding a moving picture to generate a coded stream, comprising a coding step of allowing use of a direct mode for coding a B-picture which is predictively coded with reference to a plurality of temporally preceding or subsequent coded pictures, the direct mode being a mode for performing motion compensation of a current block to be coded with reference to motion vectors of coded blocks, wherein in the coding step, motion compensation is performed, as in the direct mode, with reference to one or more of the plurality of the pictures in order of temporal proximity by considering a value of a motion vector of the current block to be coded as "0", when the B-picture is predictively coded with reference only to the coded pictures located in one direction, in display order, of a picture including the current block to be coded.

Furthermore, in the moving picture coding method according to the present invention, the coding step may include a table regeneration step of regenerating a table by eliminating a predictive coding method for backward reference from a table in which predictive coding methods for the B-picture are associated with identifiers for identifying the predictive coding methods, and in the coding step, an identifier indicating a predictive coding method for the B-picture is coded using the regenerated table.

In order to achieve the above objects, the moving picture decoding method according to the present invention is a moving picture decoding method for decoding a coded stream obtained by coding a moving picture, comprising a decoding step of allowing use of a direct mode for decoding a B-picture which is predictively decoded with reference to a plurality of temporally preceding or subsequent decoded pictures, the direct mode being a mode for performing motion compensation of a current block to be decoded with reference to motion vectors of decoded blocks, wherein the decoding step includes a motion compensation step of performing motion compensation, as in the direct mode, with reference to the motion vectors of the decoded blocks located around the current block to be decoded in one picture, when the B-picture is predictively decoded with reference only to the decoded pictures located in temporally one direction of said picture including the current block to be decoded.

Also, the moving picture decoding method according to the present invention is a moving picture decoding method for decoding a coded stream obtained by coding a moving picture, comprising a decoding step of allowing use of a direct mode for decoding a B-picture which is predictively decoded with reference to a plurality of temporally preceding or subsequent decoded pictures, the direct mode being a mode for performing motion compensation of a current block to be decoded with reference to motion vectors of decoded blocks, wherein in the decoding step, motion compensation is performed, as in the direct mode, with reference to one or more of the plurality of the pictures in order of temporal proximity by considering a value of a motion vector of the current block to be decoded as "0", when the B-picture is predictively coded with reference only to the decoded pictures located in temporally one direction of a picture including the current block to be decoded.

Furthermore, in the moving picture decoding method according to the present invention, the decoding step may include a table regeneration step of regenerating a table by eliminating a predictive decoding method for backward reference from a table in which predictive decoding methods for the B-picture are associated with identifiers for identifying the predictive decoding methods, and in the decoding step, an identifier for identifying a predictive decoding method for the B-picture in the coded stream is decoded, the predictive decoding method for said B-picture is identified using the regenerated table, and the current block to be decoded is predictively decoded according to the identified predictive decoding method.

As described above, the moving picture coding method according to the present invention suggests a method for realizing the direct mode without reference to any temporally subsequent pictures for predictive coding in direct mode even under the environment where temporally subsequent pictures are not available for reference, and further makes it possible to achieve high coding efficiency by reducing the number of items in a table for coding modes by eliminating items on reference to subsequent pictures from the table.

Also, the moving picture decoding method according to the present invention suggests a method for realizing the direct mode without reference to any temporally subsequent pictures for predictive decoding in direct mode even under the environment where temporally subsequent pictures are not available for reference, and further makes it possible to achieve decoding a coded stream obtained by coding with high efficiency without contradiction by reducing the number of items in a table for coding modes by eliminating items on reference to subsequent pictures from the table.

### Brief Description of Drawings

FIG. 1 is a diagram showing an example of reference relationship between respective pictures and their reference pictures in a conventional moving picture coding method.
FIG. 2A is a diagram showing neighboring pictures around a picture B18 extracted in display order from the pictures as shown in FIG. 1.
FIG. 2B is a diagram showing a coding order of the neighboring pictures of the picture B18 in a case where the picture B18 is coded based on the reference relationship as shown in FIG. 2A.
FIG. 3A is a diagram showing positional relationship of a current block to be coded BL51 and coded blocks having motion vectors to be referred to in a case where the current block is 16 × 16 pixels in size.
FIG. 3B is a diagram showing positional relationship of a current block to be coded BL52 and coded blocks having motion vectors to be referred to in a case where the current block is 8 × 8 pixels in size.
FIG. 4 is a diagram showing an example of motion vectors which are referred to for coding a P-picture in skip mode and coded pictures which are referred to by the motion vectors.
FIG. 5 is a diagram for explaining a method for determining a motion vector in direct mode.
FIG. 6 is a block diagram showing a structure of a moving picture coding apparatus that executes the moving picture coding method in the first embodiment.
FIG. 7 is a diagram showing an example of reference relationship of respective pictures in a case where pictures which are subsequent to a picture including a current block to be coded in display order are not available for reference.
FIG. 8 is a flowchart showing an example of an operation of a mode selection unit in a case where the direct mode is selected.
FIG. 9 is a diagram showing an example of reference relationship of motion vectors in a case where coded blocks having motion vectors to be referred to include blocks each of which has two motion vectors.
FIG. 10 is a flowchart showing an example of processing steps in a case where the mode selection unit as shown in FIG. 6 performs spatial prediction on a current block to be coded using the first method.
FIG. 11 is a diagram showing an example of a data structure at a slice level in a coded stream generated by a coded stream generation unit as shown in FIG. 6.
FIG. 12 is a diagram showing an example of how to refer to motion vectors in a case where two motion vectors are calculated by extracting motion vectors which refer to two pictures that precede a current picture to be coded in display order.
FIG. 13 is a block diagram showing a structure of a moving picture decoding apparatus in the present embodiment.
FIG. 14 is a flowchart showing processing steps of decoding in direct mode performed by a motion compensation decoding unit as shown in FIG. 13.
FIG. 15A is a diagram showing an example of a table in which codes for identifying prediction modes for B-pictures and their coding modes are associated with each other.
FIG. 15B is a diagram showing an example of a table in which codes for identifying prediction modes for B-pictures and their coding modes in a case where the prediction direction is limited to forward direction only.
FIG. 16A is a diagram showing an example of a physical format of a flexible disk that is a main unit of a recording medium.
FIG. 16B is a diagram showing a front view of an appearance of the flexible disk, a cross-sectional view of the flexible disk and the flexible disk itself.
FIG. 16C is a diagram showing a configuration for recording and reproducing the above program on and from the flexible disk FD.
Fig. 17 is a block diagram showing an overall configuration of a content supply system that realizes content distribution services.
Fig. 18 is a diagram showing an example of an appearance of a mobile phone.
Fig. 19 is a block diagram showing a structure of the mobile phone.
Fig. 20 is a block diagram for explaining apparatuses for performing the coding processing or the decoding processing as shown in the above embodiment, and a system using these apparatuses.

### Best Mode for Carrying Out the Invention

The embodiments of the present invention will be explained in detail referring to the figures.

### (First Embodiment)

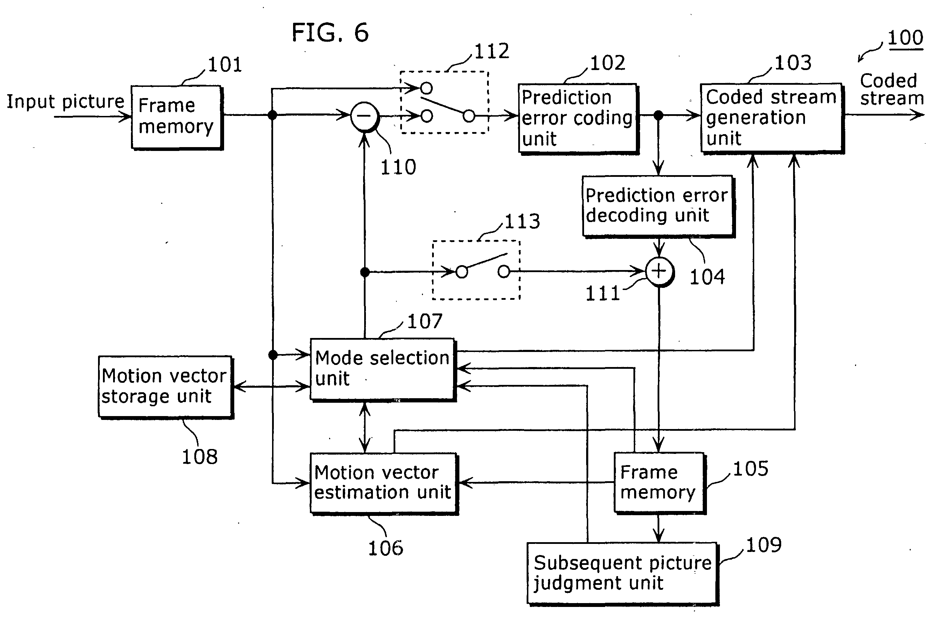

Fig. 6 is a block diagram showing a structure of a moving picture coding apparatus 100 that executes a moving picture coding method of the first embodiment. The moving picture coding apparatus 100 is a moving picture coding apparatus that determines a motion vector of a current block to be coded with reference to motion vectors of coded blocks around the current block in the same picture when referring only to the pictures that precede the current picture in display order for coding a B-picture in direct mode, and it includes a frame memory 101, a prediction error coding unit 102, a coded stream generation unit 103, a prediction error decoding unit 104, a frame memory 105, a motion vector estimation unit 106, a mode selection unit 107, a motion vector storage unit 108, a subsequent picture judgment unit 109, a difference calculation unit 110, an addition unit 111, a switch 112 and a switch 113. The frame memory 101, the frame memory 105 and the motion vector storage unit 108 are memories realized by a RAM or the like, and the frame memory 101 provides a storage area for reordering pictures in a moving picture inputted in display order into coding order. The prediction error coding unit 102 performs frequency transformation such as DCT on a prediction error obtained by the difference calculation unit 110 so as to quantize it and outputs the result. The coded stream generation unit 103 performs variable length coding on the coded result outputted from the prediction error coding unit 102, transforms it into a format of a coded stream, adds additional information such as a header which describes information on a predictive coding method, and thus generates a coded stream. The prediction error decoding unit 104 performs variable length decoding on the coded result outputted from the prediction error coding unit 102, inversely quantizes the result, and then performs inverse frequency transformation such as IDCT on it so as to generate a decoded prediction error. The frame memory 105 provides a storage area for holding a predictive picture on a picture-by-picture basis. The motion vector estimation unit 106 estimates a motion vector per predetermined unit such as a macroblock or a block that is subdivision of a macroblock. The mode selection unit 107 selects the optimum prediction mode referring to the motion vectors used for the coded pictures stored in the motion vector storage unit 108, reads out respective blocks in the predictive picture pointed by the motion vector estimated by the motion vector estimation unit 106 from the frame memory 105, and outputs them to the difference calculation unit 110. The motion vector storage unit 108 provides a storage area for holding motion vectors estimated per block in the coded pictures. The subsequent picture judgment unit 109 judges whether or not a picture subsequent to a current picture to be coded in display order has already been coded. The difference calculation unit 110 outputs the difference between a current macroblock to be coded and a macroblock in a predictive image determined by the motion vector. The addition unit 111 adds the decoded prediction errors outputted from the prediction error decoding unit 104 and the blocks in the predictive picture outputted from the mode selection unit 107, and stores the addition result (blocks that make up the predictive picture) in the frame memory 105. The switch 112 is switched depending on a picture type so as to provide continuity between a readout line of the frame memory 101 and the prediction error coding unit 102 in a case of an I-picture subject to intra picture predictive coding. Therefore, each macroblock in the current picture to be coded which is read out from the frame memory 101 is inputted directly to the prediction error coding unit 102. The switch 112 provides continuity between the output side of the difference calculation unit 110 and the prediction error coding unit 102 in a case of a P-picture and a B-picture subject to inter picture predictive coding. Therefore, the calculation result of the difference calculation unit 110 is inputted to the prediction error coding unit 102. The switch 113 is switched between continuity and discontinuity depending on a picture type of a current picture to be coded. The switch 113 provides discontinuity between the output side of the mode selection unit 107 and the input side of the addition unit 111 in a case of an I-picture subject to intra picture predictive coding, whereas it provides continuity between the output side of the mode selection unit 107 and the input side of the addition unit 111 in a case of a P-picture and a B-picture subject to inter picture predictive coding. Therefore, in a case of an I-picture subject to intra picture predictive coding, the decoded prediction error obtained by decoding by the prediction error decoding unit 104 is outputted to the frame memory 105.

The moving picture coding method in the first embodiment of the present invention will be explained using the block diagram as shown in FIG. 6.

A moving picture to be coded is inputted to the frame memory 101 in time order on a picture-by-picture basis. Each picture is divided into blocks called macroblocks of horizontal 16 × vertical 16 pixels, for example, and the following processing is performed on a block-by-block basis.

A macroblock read out from the frame memory 101 is inputted to the motion vector estimation unit 106. The motion vector estimation unit 106 estimates a motion vector of a current macroblock to be coded using images stored in the frame memory 105 (images obtained by decoding the coded pictures) as reference pictures. In other prediction modes than the direct mode, the motion vector estimation unit 106 estimates the motion vector per macroblock or area that is a subdivision of a macroblock (for example, a small block obtained by subdividing a macroblock of 16 × 8, 8 × 16, 8 × 8 pixels). Using the coded picture as a reference picture, the motion vector estimation unit 106 estimates the motion vector pointing the position of a block which is estimated to be closest to the structure of the pixel values of the current macroblock to be coded in the search area within that reference picture. The mode selection unit 107 selects the optimum prediction mode referring to the motion vectors used for the coded pictures stored in the motion vector storage unit 108. The subsequent picture judgment unit 109 judges whether the subsequent pictures in display order have already been coded or not. When it is judged that the subsequent pictures have not yet been coded, the mode selection unit 107 selects the prediction mode in which the subsequent pictures in display order are not referred to for coding a B-picture.

The optimum motion vector is determined from among the motion vectors estimated by the motion vector estimation unit 106 according to the prediction mode selected by the mode selection unit 107, and the predictive block referred to by the determined motion vector is read out from the frame memory 105 and inputted to the difference calculation unit 110. The difference calculation unit 110 calculates the difference between the predictive block and the current macroblock to be coded to generate a prediction error image. The generated prediction error image is inputted to the prediction error coding unit 102, and the prediction error coding unit 102 performs frequency transformation and quantization on that image. The above flow of processing is the operation in a case where inter picture predictive coding is selected, but it is switched into intra picture predictive coding by the switch 112. At last, the coded stream generation unit 103 performs variable length coding on control information of motion vector and the like, image information, and others outputted from the prediction error coding unit 102, so as to generate a coded stream to be outputted finally.

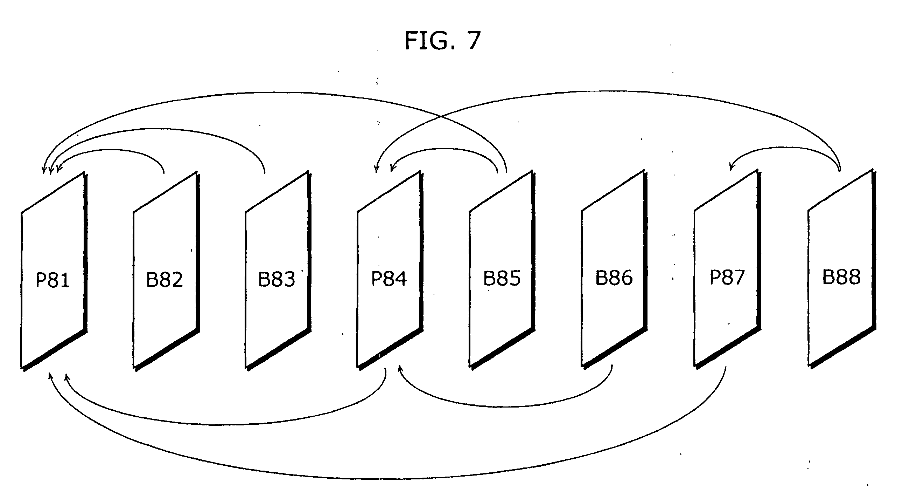

That is the overview of the flow of coding, and the following is detailed explanation of the processing in direct mode performed by the mode selection unit 107. It should be noted, however, that the following explanation will be made on the assumption that the subsequent picture judgment unit 109 judges that the subsequent pictures have not yet been coded. FIG. 7 is a diagram showing an example of reference relationship of respective pictures in a case where a picture including a current block to be coded cannot refer to subsequent pictures in display order. As shown in this figure, predictive coding is performed for all the B-pictures included in a picture sequence in display order with reference one or a plurality of preceding pictures in display order. For example, motion compensation is performed on a picture B82 and a picture B83 which are both B-pictures with reference only to a picture B81 respectively because the picture P81 is only the coded preceding picture in display order. As for motion compensation for a picture B85 and a picture B86 which are both B-pictures, the picture B85 refers to two coded preceding pictures in display order (the pictures P81 and P84), whereas the picture B86 does not refer to the picture P81 which is temporally far from the picture B86 itself in display order but refers only to the picture P84 which is temporally closer in display order, for example. In this case, all the motion vectors of respective B-pictures refer to coded pictures which precede the current picture in display order.

In the present embodiment, when the mode selection unit 107 selects the direct mode for predictive coding of a B-picture under the environment where the subsequent pictures in display order have not yet been coded, a motion vector of a current block to be coded is generated with reference to motion vectors of coded blocks located around the current block in the same picture (hereinafter referred to as "spatial prediction"), instead of generating the motion vector of the current block with reference to the motion vectors of the coded blocks belonging to the picture immediately subsequent to the current picture in display order (hereinafter referred to as "temporal prediction"), as shown in the conventional method, and thus the direct mode is realized.

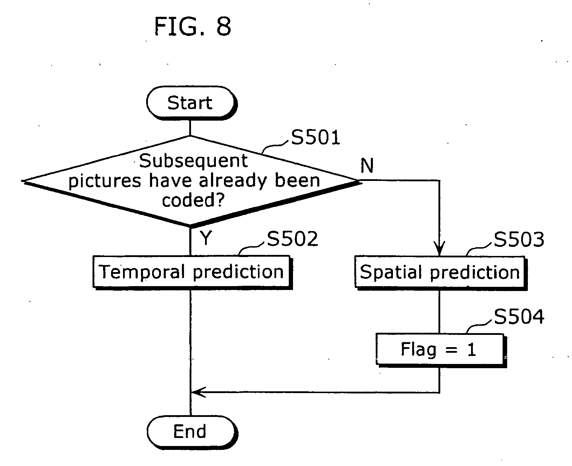

FIG. 8 is a flowchart showing an example of an operation of the mode selection unit 107 in a case where the direct mode is selected. When the direct mode is selected, the mode selection unit 107 first causes the subsequent picture judgment unit 109 to judge whether the pictures subsequent to the current picture in display order have already been coded or not (S501), and if the subsequent pictures in display order have already been coded as a result of the judgment, it performs predictive coding of the current block using the temporal prediction in the conventional manner (S502). Then, the mode selection unit 107 ends the processing for the current block and goes to the processing of the next current block. If the subsequent pictures in display order have not yet been coded as a result of the judgment, it performs predictive coding of the current block using the above-mentioned spatial prediction (S503). The mode selection unit 107 further sets a value of a flag "spatial_flag" indicating that the above-mentioned spatial prediction has been performed to "1", and outputs it to the coded stream generation unit 103 (S504). Then, the mode selection unit 107 ends the processing of the current block and goes to the processing of the next current block.

A specific method of spatial prediction performed in Step S503 in FIG. 8 will be explained below.

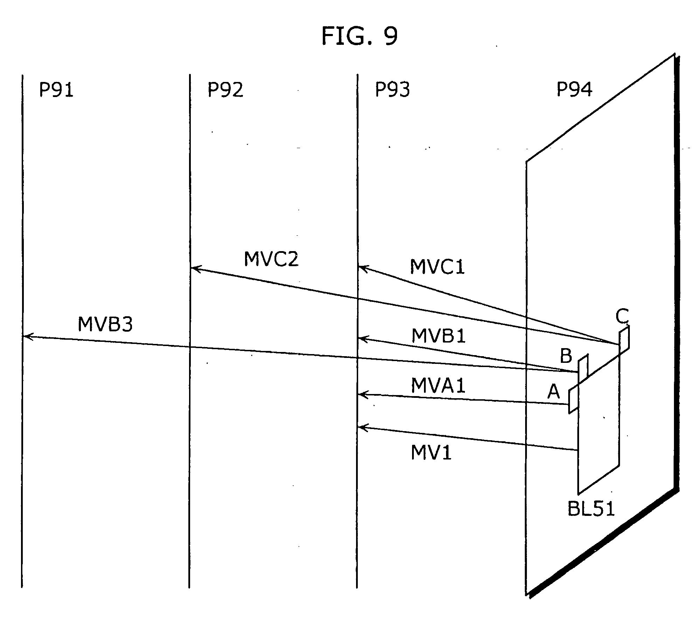

In the example of the skip mode which has been explained referring to FIG. 4, each of the coded blocks which are referred to has one motion vector. However, the prediction modes of B-pictures include a mode for performing motion compensation with reference to two preceding pictures in display order at the same time, as shown in FIG. 7. In such a mode, one block has two motion vectors. FIG. 9 is a diagram showing an example of reference relationship of motion vectors in a case where coded blocks of which motion vectors are referred to include blocks each of which has two motion vectors. A picture P94 is a current picture to be coded, and the block BL51 is a current block to be coded in direct mode.

First, as the first method, the mode selection unit 107 refers to, as a rule, the motion vectors for the blocks located in the positions A, B and C with respect to the current block BL51 (or the block BL52) to be coded in direct mode, as shown in either case of FIG. 3A or FIG. 3B. However, the reference is changed according to the following rules:
1. If the block C is not available for reference, the blocks located in the positions A, B and D are referred to.
2. If there is any blocks of which motion vectors are not available for reference in the three blocks located in the positions A, B and C or A, B and D, such blocks are excluded from the reference blocks for using their motion vectors.

The mode selection unit 107 compares the distances from the current picture in display order of the pictures which are pointed as reference pictures by the motion vectors of the three blocks A, B and C (or A, B and D) to be referred to. The mode selection unit 107 extracts the motion vector referring to the picture located closest to the current picture in display order from among the compared pictures. If a plurality of motion vectors are extracted, the median or average of them is calculated. For example, if an odd number of motion vectors are extracted, the median thereof may be calculated, and if an even number of motion vectors are extracted, the average thereof may be calculated. When motion compensation is performed on the current picture with reference only to the pictures that precede the current picture in display order, the motion vector calculated in the above manner is considered as a motion vector of the current block to be coded when the direct mode is selected. When all the blocks A, B and C (or A, B and D) are not available for reference, predictive coding is performed in direct mode with reference to the immediately preceding picture by considering the motion vector of the current block as "0".

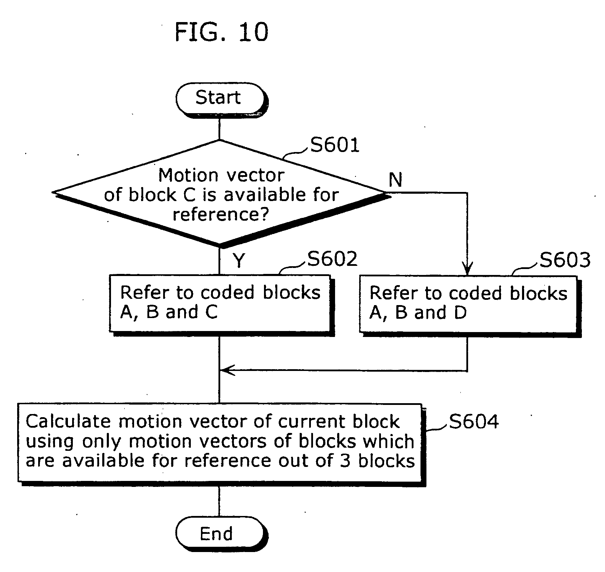

FIG. 10 is a flowchart showing an example of the processing steps in a case where the mode selection unit 107 as shown in FIG. 6 performs spatial prediction on a current block to be coded using the first method. The following explanation will be made taking the current block BL51 as shown in FIG. 9 as an example. First, the mode selection unit 107 checks whether a block located in the position C with respect to the current block BL51 is available for reference or not (S601). The block located in the position C in FIG. 9 has a motion vector MVC1 referring to the picture P93 and a motion vector MVC2 referring to the picture P92. Therefore, the mode selection unit 107 refers to the motion vectors for the blocks located in the positions A, B and C (S602). The block located in the position A has a motion vector MVA1 referring to the picture P93, and the block located in the position B has a motion vector MVB1 referring to the picture P93 and a motion vector MVB3 referring to the picture P91. When the block located in the position C is outside the current picture P94, outside a slice including the current block BL51, or has no motion vector because it is coded based on intra picture prediction or the like, in Step S601, the mode selection unit 107 refers to the motion vector for the block located in the position D in FIG. 3A and FIG. 3B (S603), instead of the block located in the position C. In sum, it refers to the three blocks located in the positions A, B and D.

Next, when any of the referred three blocks (A, B and C or A, B and D) are outside the current picture P94, outside a slice including the current block BL51, or have no motion vector because they are coded based on intra picture prediction or the like, the mode selection unit 107 calculates the motion vector for the current block by eliminating such blocks from the reference candidates (S604). When all the three blocks (A, B and C or A, B and D) are not available for reference, the mode selection unit 107 refers to the picture that immediately precedes the current picture by considering the motion vector of the current block as "0". The mode selection unit 107 extracts only the motion vectors referring to the picture closest to the current picture in display order from among the referred motion vectors so as to obtain the motion vector MVA1, the motion vector MVB1 and the motion vector MVC1 referring to the picture P93 respectively. The mode selection unit 107 further calculates the median or average of these motion vectors. For example, since three motion vectors are obtained in this case, the mode selection unit 107 calculates the median thereof. As a result, it can determine one motion vector MV1 for motion compensation of the block BL51.

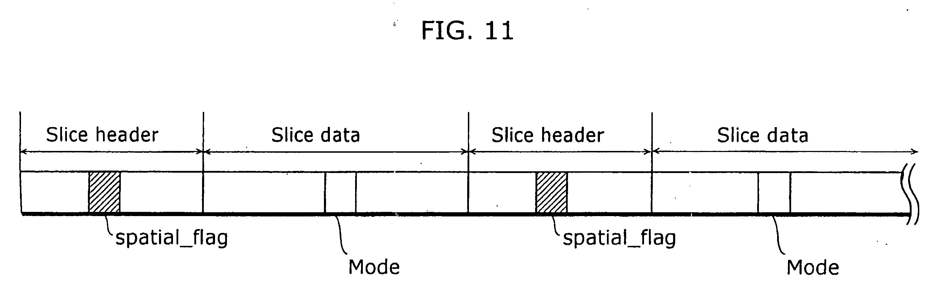

FIG. 11 is a diagram showing an example of a data structure per slice in a coded stream generated by the coded stream generation unit 103 as shown in FIG. 6. A coded stream of each picture is made up of a plurality of slice data, and each slice data is made up of a plurality of macroblock data. As shown in this figure, a slice header is added to each slice data in the coded stream, and information on each slice and the like are written in the slice header. The information on each slice, for example, a number of a frame including the slice, a flag "spatial_flag" indicating a type of a coding method for the above direct mode and the like, is written.

As described above, the present embodiment suggests a method for realizing the direct mode for predictive coding in direct mode without referring to any subsequent pictures in display order, even under the environment where no subsequent picture in display order is available for reference, and thus shows a coding method for realizing high coding efficiency.

In the above-mentioned first method, the motion vectors referring to the picture closest to the current picture in display order are extracted from among the referred motion vectors, but only the motion vectors referring to the picture that immediately precedes the current picture may be extracted from among the referred motion vectors. In the example of FIG. 9, the picture closest to the current picture in display order out of the pictures referred to by the referred motion vectors is the picture that immediately precedes the current picture, so the same motion vectors are obtained in either case. If there is no motion vector referring to the closest picture in display order, coding is performed in direct mode by considering the motion vector of the current block as "0".

Also, in the above first method, for determining the motion vector used for the direct mode, only the motion vectors referring to the picture closest to the current picture in display order are extracted from among the pictures referred to by the neighboring coded blocks so as to calculate one motion vector finally. But instead, it is possible, as the second method, to extract motion vectors referring to N number of pictures from the pictures that precede the current picture in display order to determine one motion vector for each picture to be referred to and to perform motion compensation with reference only to the preceding pictures using the determined N number of motion vectors as motion vectors used for predictive coding in direct mode. In this case, a predictive image is generated by calculating the average of pixel values of N number of areas specified by the N number of motion vectors. Note that it is also possible to generate the predictive image by a method for calculating the weighted average of pixel values of respective areas, not the simple average thereof. Using this method, it is possible to realize highly accurate motion compensation for a sequence of images in which pixel values change gradually in display order.

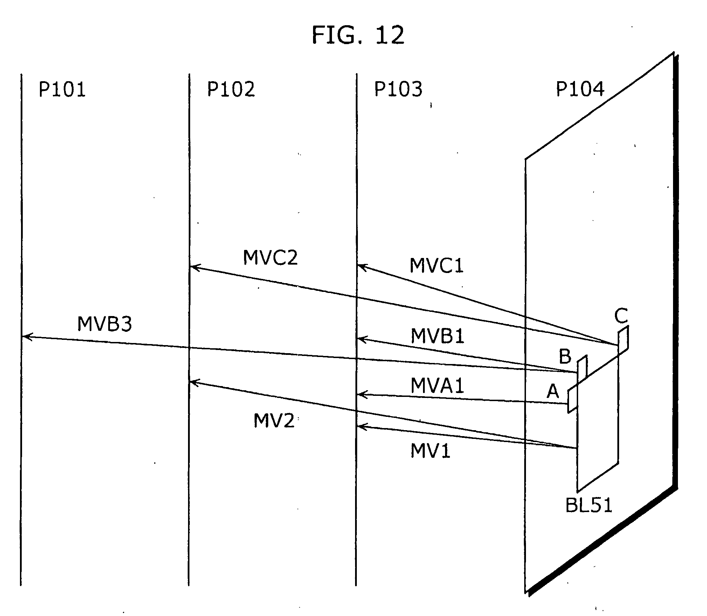

FIG. 12 is a diagram showing an example of how to refer to motion vectors in a case where two motion vectors are calculated by extracting motion vectors referring to two pictures that precede a current picture to be coded in display order. A picture P104 is a current picture to be coded, and BL51 is a block to be coded in direct mode. The motion vector MV1 is determined by calculating the median or average of the motion vector MVA1, the motion vector MVB1 and the motion vector MVC1 referring to the immediately preceding picture P103 in display order from among the pictures referred to by a plurality of motion vectors to be referred to, and the motion vector MVB2 is determined by calculating the median or average of the motion vectors referring to the picture P102 that precedes the current picture by two pictures in display order, namely the motion vector MVC2 itself, and thus coding is performed in direct mode using these two motion vectors.

It is possible to extract only the motion vectors referring to the specified picture to determine the value of the motion vector for the current block used in direct mode and to perform motion compensation based on the specified picture, instead of a method of using only motion vectors for the blocks referring to one or N number of preceding pictures in display order from among the motion vectors referred to in the examples of FIG. 3A and FIG. 3B.

In direct mode coding, it is possible to perform motion compensation in direct mode by considering a value of a motion vector of a current block as "0" and referring to the immediately preceding picture as a reference picture, instead of performing motion compensation by referring to coded blocks located in the positions as shown in FIG. 3A and FIG. 3B. Since use of this method makes it unnecessary to execute a step of calculating a motion vector used for direct mode, simplification of coding processing can be achieved. It should be noted that, in this case, instead of "spatial_flag" indicating whether to perform temporal prediction or spatial prediction in direct mode, a flag indicating that motion compensation is to be performed by considering a value of a motion vector of a current block as "0" without reference to any coded blocks may be described in a slice header.

It should also be noted that, in the above method, motion vectors referring to the picture that is closest to a current picture in display order, among the pictures referred to by the motion vectors obtained with reference to three blocks, are extracted from among such motion vectors, but the present invention is not limited to that. For example, it is possible to extract a motion vector referring to the picture closest to a current picture in coding order.

### (Second Embodiment)

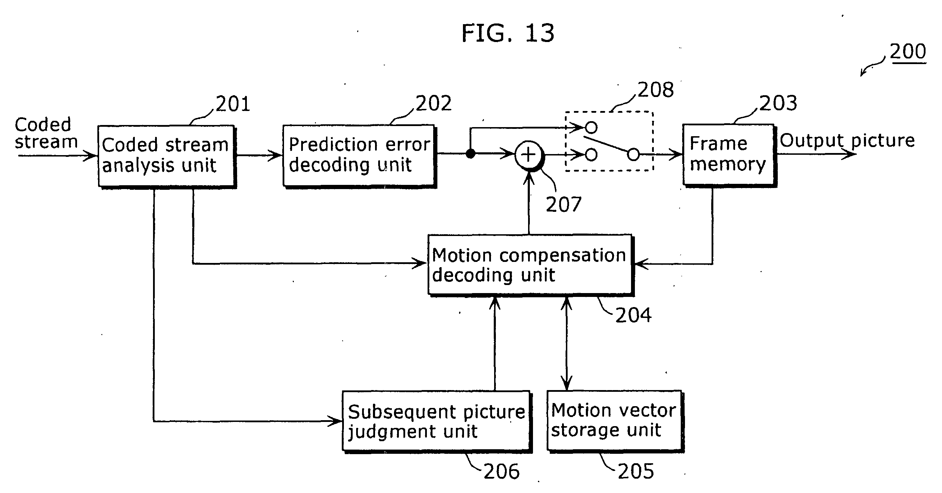

The moving picture decoding method in the second embodiment of the present invention will be explained using a block diagram as shown in FIG. 13. However, it is supposed that the coded stream generated by the moving picture coding method in the first embodiment is decoded by the present moving picture decoding method.

FIG. 13 is a block diagram showing a structure of a moving picture decoding apparatus 200 in the present embodiment. The moving picture decoding apparatus 200 is a moving picture decoding apparatus that decodes a current block to be decoded which has been coded in direct mode using spatial prediction when a flag indicating a direct mode decoding method is "1", and includes a coded stream analysis unit 201, a prediction error decoding unit 202, a frame memory 203, a motion compensation decoding unit 204, a motion vector storage unit 205, a subsequent picture judgment unit 206, an addition unit 207 and a switch 208.

The coded stream analysis unit 201 analyzes an inputted coded stream, extracts coded prediction error data, motion vector information, and information on prediction modes and others from the coded stream, and outputs the extracted motion vector information and information on prediction modes and others to the motion compensation decoding unit 204 and the coded prediction error data to the prediction error decoding unit 202 respectively. The prediction error decoding unit 202 performs variable length decoding, inverse quantization and inverse frequency transformation and the like on the extracted coded prediction error data so as to generate a prediction error image. The frame memory 203 stores decoded images on a picture-by-picture basis, and outputs the stored pictures to an external monitor or the like in display order as output images. The motion compensation decoding unit 204 decodes a prediction mode and motion vectors used for the prediction mode, and generates a predictive image for a current block to be decoded based on the inputted motion vector information using the decoded images stored in the frame memory 203 as reference pictures. When decoding motion vectors, it uses the decoded motion vectors stored in the motion vector storage unit 605. The motion vector storage unit 205 stores the motion vectors decoded by the motion compensation decoding unit 204. The subsequent picture judgment unit 206 judges whether pictures subsequent to the current picture in display order have already been decoded or not when the predictive image is generated by the motion compensation decoding unit 204. Note that the subsequent picture judgment unit 206 is used in the fourth embodiment but is not needed in the present embodiment. The addition unit 207 adds the prediction error image decoded by the prediction error decoding unit 202 and the predictive image generated by the motion compensation decoding unit 204 so as to generate the decoded image of the current block.

First, the coded stream analysis unit 201 extracts various types of information such as the motion vector information and the coded prediction error data. Here, the extracted motion vector information is outputted to the motion compensation decoding unit 204 and the coded prediction error data is outputted to the prediction error decoding unit 202 respectively. The motion compensation decoding unit 204 generates a predictive image based on the decoded motion vector using the decoded images of the decoded pictures stored in the frame memory 203 as reference pictures.

The predictive image generated as mentioned above is inputted to the addition unit 207, the inputted predictive image and the prediction error image generated by the prediction error decoding unit 202 are added, and then a decoded image is generated. When prediction direction is not limited, the generated decoded images of pictures are reordered in display order in the frame memory 203, but when subsequent pictures in display order are not available for reference, it is possible to display the pictures in decoding order without reordering them. The above embodiment describes an operation performed for a coded stream which has been coded based on inter picture prediction, but it may be switched by the switch 208 into decoding processing for a coded stream which has been intra picture coded.

That is an overview of a flow of decoding, and the processing performed in the motion compensation decoding unit 204 will be explained below in detail.

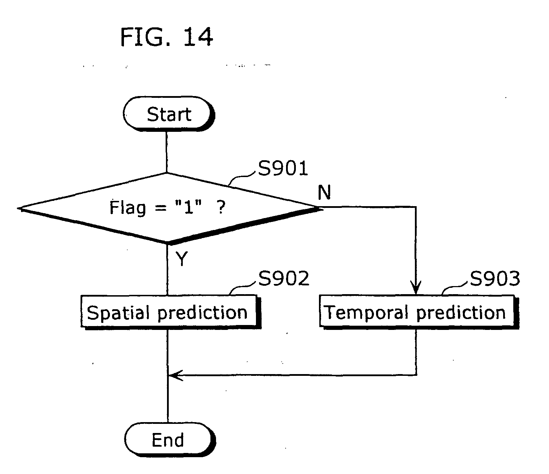

FIG. 14 is a flowchart showing processing steps for direct mode decoding performed by the motion compensation decoding unit 204 as shown in FIG. 13. The prediction mode and motion vector information are added per macroblock or per block that is a subdivision of a macroblock. These types of information are described in slice data areas in a coded stream in the order of macroblocks in a slice. When the prediction mode Mode indicates the direct mode, the motion compensation decoding unit 204 checks whether the flag "spatial_flag" is set to "0" or "1" in the slice header to be decoded (S901). The flag "spatial_flag" is set to "1", which instructs to perform decoding using spatial prediction when the subsequent pictures have not yet been decoded. The motion compensation decoding unit 204 creates a predictive image of a current block to be decoded using direct mode spatial prediction when the flag "spatial_flag" is set to "1" (S902), whereas the motion compensation decoding unit 204 creates a predictive image of a current block using direct mode temporally prediction when the flag is set to "0" (S903). When the prediction mode Mode in the slice header indicates another prediction mode than the direct mode, the motion compensation decoding unit 204 considers a previously decoded picture as a reference picture for a current macroblock to be decoded, specifies a block in the reference picture by the decoded motion vector, and extracts a predictive image for motion compensation from the specified block so as to create the predictive image.

A specific method for spatial prediction performed in Step S902 in FIG. 14 will be explained below.

In the example of the skip mode which has been explained using FIG. 4, each of decoded blocks to be referred to has one motion vector. However, the prediction modes for B-pictures include a mode for performing motion compensation with reference to two preceding pictures in display order at the same time, as shown in FIG. 7. In such a mode, one block has two motion vectors. FIG. 9 shows an example of reference relationship of motion vectors in a case where decoded blocks of which motion vectors are referred to include blocks each of which has two motion vectors. The picture P94 is a current picture to be decoded, and the block BL51 is a block to be decoded based on direct mode prediction.

First, as the first method, the motion compensation decoding unit 204 refers to, as a rule, the motion vectors for the blocks located in the positions A, B and C with respect to the current block BL51 (or the block BL52) to be decoded based on direct mode prediction, as shown in either FIG. 3A or FIG. 3B. However, the reference is changed according to the following rules:
1. If the block C is not available for reference, the blocks located in the positions A, B and D are referred to.
2. If any of the three blocks located in the positions A, B and C or A, B and D are not available for reference, such blocks are excluded from the reference blocks for using their motion vectors.

The motion compensation decoding unit 204 compares distances from a current picture to be decoded in display order of reference pictures pointed by the motion vectors for the three reference blocks A, B and C (or A, B and D). The motion compensation decoding unit 204 extracts the motion vector referring to the picture closest to the current picture in display order from among the compared pictures. If a plurality of motion vectors are extracted, the median or average thereof is calculated. For example, it is possible to calculate the median if an odd number of motion vectors are extracted, and to calculate the average if an even number of motion vectors are extracted. If motion compensation is performed with reference only to the pictures that precede the current picture in display order, the motion vectors obtained in the above manner shall be motion vectors for the current block when the direct mode is selected. If all the blocks A, B and C (or A, B and D) are not available for reference, prediction decoding is performed in direct mode by considering the motion vector for the current block as 0 and using the immediately preceding picture as a reference picture.

The flowchart in FIG. 10 shows an example of the processing steps in a case where the motion compensation decoding unit 204 as shown in FIG. 13 performs spatial prediction of a current block to be decoded using the first method. This processing will be explained below by taking the current block to be decoded BL51 as shown in FIG. 9 as an example. First, the motion compensation decoding unit 204 checks whether a block located in the position C with respect to the current block BL51 is available for reference or not (S601). The block located in the position C has a motion vector MVC1 referring to the reference picture P93 and a motion vector MVC2 referring to the reference picture P92 in FIG. 9. Therefore, the motion compensation decoding unit 204 refers to the motion vectors for the blocks located in the positions A, B and C (S602). The block located in the position A has a motion vector MVA1 referring to the reference picture P93, and the block located in the position B has a motion vector MVB1 referring to the reference picture P93 and a motion vector MVB3 referring to the reference picture P91. In Step S601, if the block located in the position C is outside the current picture P94 or outside a slice including the current block BL51, or has no motion vector due to decoding based on intra picture prediction or the like, the motion compensation decoding unit 204 refers to the motion vector for the block located in the position D as shown in FIG. 3A and FIG. 3B (S603), instead of the block located in the position C. In sum, it refers to the three blocks located in the positions A, B and D.

Next, if any of the referred three blocks (A, B and C or A, B and D) are outside the current picture P94 or outside a slice including the current block BL51, or have no motion vector due to decoding based on intra picture prediction or the like, the motion compensation decoding unit 204 calculates the motion vector for the current block by excluding such a block from the reference candidates (S604). If all the three blocks (A, B and C or A, B and D) are not available for reference, the motion compensation decoding unit 204 considers the motion vector for the current block as "0" and refers to the picture that immediately precedes the current picture. The motion compensation decoding unit 204 extracts only the motion vectors referring to the reference picture closest to the current picture in display order from the referred motion vectors so as to obtain the motion vector MVA1, the motion vector MVB1 and the motion vector MVC1 referring to the picture P93. The motion compensation decoding unit 204 further calculates the median or average of these motion vectors. For example, since three motion vectors are obtained here, the median thereof is calculated. As a result, one motion vector for motion compensation of the block BL51 can be determined.

As described above, the present embodiment suggests a method for realizing the direct mode without referring to the subsequent pictures in display order for direct mode prediction decoding, even under the environment where the subsequent pictures in display order are not available for reference, and shows a decoding method for achieving high coding efficiency.

In the above first method, the motion vectors referring to the reference picture closest to the current picture in display order is extracted from among the referred motion vectors, but only the motion vectors referring to the picture that immediately precedes the current picture may be extracted from among the referred motion vectors. In the example of FIG. 9, the picture closest to the current picture in display order out of the reference pictures referred to by the referred motion vectors is the picture that immediately precedes the current picture, so the same motion vectors are obtained in either case. If there is no motion vector referring to the closest reference picture in display order, decoding is performed in direct mode by considering the motion vector of the current block as "0".

Also, in the above first method, for determining the motion vector used for the direct mode, only the motion vectors referring to the picture closest to the current picture in display order are extracted from among the motion vectors referring to the pictures referred to by the neighboring decoded blocks, so as to calculate one motion vector finally. But instead, it is possible, as the second method, to extract motion vectors referring to N number of reference pictures from the pictures that precede the current picture in display order so as to determine one motion vector for each reference picture, and to perform motion compensation with reference only to the preceding pictures using the determined N number of motion vectors as motion vectors for direct mode prediction decoding. In this case, a predictive image is generated by calculating the average of pixel values of N number of areas specified by the N number of motion vectors. Note that the predictive image can be generated by a method of calculating the weighted average value of pixel values of respective areas, not the simple average value thereof. Using this method, it is possible to realize highly accurate motion compensation for a sequence of images in which pixel values change gradually in display order.

FIG. 12 is a diagram showing an example of how to refer to motion vectors in a case where two motion vectors are calculated by extracting motion vectors referring to two reference pictures preceding a current picture to be decoded in display order. A picture P104 is a current picture to be decoded, and BL51 is a block to be predictively decoded in direct mode. The motion vector MV1 is determined by calculating the median or average of the motion vector MVA1, the motion vector MVB1 and the motion vector MVC1 referring to the immediately preceding picture P103 in display order among the pictures referred to by a plurality of motion vectors to be referred to, and the motion vector MVB2 is determined by calculating the median or average of the motion vectors referring to the picture P102 that precedes by two pictures in display order, namely, the motion vector MVC2 itself, and thus decoding is performed in direct mode using these two motion vectors.

It is possible to extract only the motion vectors referring to the specified reference picture to determine the value of the motion vector of the current block used for direct mode decoding and to perform motion compensation based on the specified picture, instead of a method of using only the motion vectors for the blocks referring to one or N number of preceding reference pictures among the motion vectors for the blocks to be referred to in the examples of FIG. 3A and FIG. 3B.

In direct mode decoding, it is also possible to perform motion compensation in direct mode by considering a value of a motion vector of a current block as "0" and referring to be the immediately preceding picture, instead of performing motion compensation by referring to coded blocks located in the positions as shown in FIG. 3A and FIG. 3B. Since use of this method makes it unnecessary to execute a step of calculating motion vectors used for direct mode, simplification of decoding processing can be achieved. It should be noted that, if a flag indicating that motion compensation is to be performed by considering the value of the motion vector of the current block as "0" without reference to the blocks which have been coded in direct mode, it is possible to perform motion estimation in direct mode by switching into the above-mentioned operation based on the analysis of the above flag value.

It should also be noted that in the above method, a motion vector referring to the picture closest to a current picture in display order, in the pictures referred to by motion vectors obtained with reference to three blocks, is extracted from among such motion vectors, but the present invention is not limited to that. For example, motion vectors referring to the picture closest to a current picture in decoding order may be extracted.

### (Third Embodiment)

The moving picture coding method in the third embodiment of the present invention will be explained using a block diagram as shown in FIG. 6.

A moving picture to be coded is inputted to the frame memory 101 in time order on a picture-by-picture basis. Each picture is divided into blocks called macroblocks. of horizontal 16 × vertical 16 pixels, for example, and the following processing is performed on a block-by-block basis.

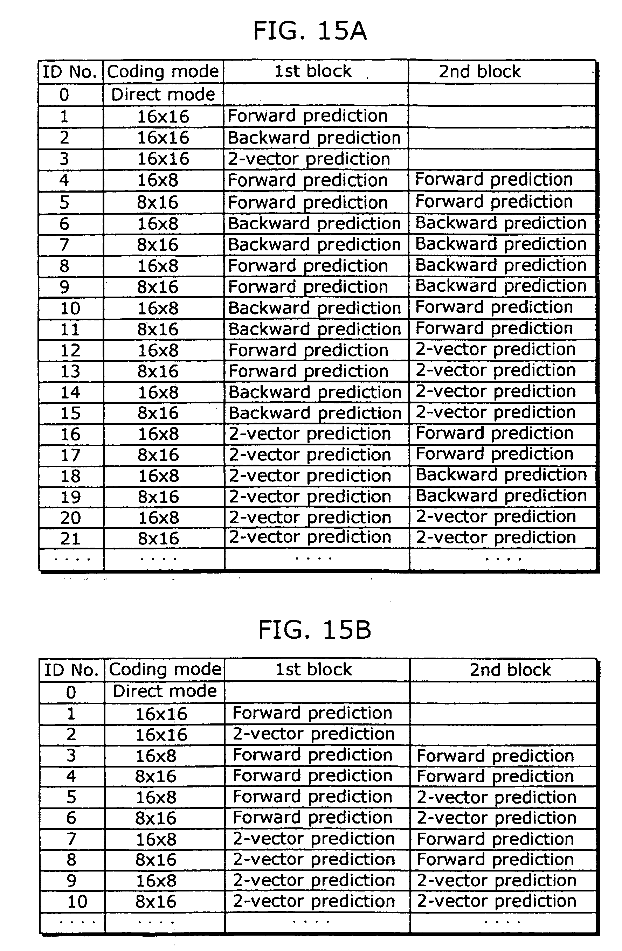

A macroblock read out from the frame memory 101 is inputted to the motion vector estimation unit 106. Here, motion estimation for a current macroblock to be coded is performed using images obtained by decoding coded pictures stored in the frame memory 105. The mode selection unit 107 determines the optimum prediction mode with reference to motion vectors used for the coded pictures and stored in the motion vector storage unit 108. The subsequent picture judgment unit 109 judges whether the subsequent pictures in display order have already been coded or not, and when it judges that they have not yet been coded, selection of a prediction mode is limited so that a prediction mode in which subsequent pictures in display order are not selected for coding a B-picture. FIGs. 15A and15B show examples of tables on which codes for identifying prediction modes for B-pictures are associated with their coding modes. If prediction direction is not limited, a table as shown in FIG. 15A showing all the reference patterns is used, but if the prediction direction is limited to forward direction only, a table as shown in FIG. 15B which is remade by eliminating all the patterns of backward reference is referred to. As a result, it is possible to reduce a bit amount required for codes for identifying prediction modes. Note that respective items in the tables in FIG. 15A and FIG. 15B can be handled in the same manner even if other values than the values indicated in these tables are used.

FIG. 7 shows reference relationship of pictures in a case where the subsequent pictures in display order are not available for reference. Predictive coding is performed for all the B-pictures included in the sequence with reference to one or more coded preceding pictures in display order.

A predictive image determined by the obtained motion vector is inputted to the difference calculation unit 110, which calculates the difference from the current macroblock to be coded so as to generate a prediction error image, and the prediction error coding unit 102 performs coding. The above-mentioned flow of the processing is an operation performed when inter picture predictive coding is selected, but it may be switched into intra picture predictive coding by the switch 112. The coded stream generation unit 103 performs variable length coding on the control information for motion vectors and others, and the image information and the like outputted from the prediction error coding unit 102, so as to generate a coded stream to be outputted finally.

That is an overview of the flow of coding, and the processing performed in the motion vector estimation unit 106 and the mode selection unit 107 will be explained below in detail. However, it is assumed here that the subsequent picture judgment unit 109 judges that the subsequent pictures have not yet been coded.

Motion vectors are estimated per macroblock or per area that is a subdivision of a macroblock. Using a previously coded picture as a reference picture, a motion vector pointing to the position which is predicted to be optimum in a search area in the reference picture and the prediction mode are determined, and thus the predictive image of the current macroblock to be coded is created.

When the mode selection unit 107 selects the direct mode for predictive coding of B-pictures under the environment where the subsequent pictures in display order have not yet been coded, the direct mode is realized by referring to motion vectors of coded blocks located around a current block to be coded, instead of referring to the motion vectors of the immediately subsequent picture in display order, as described in the background art.

First, a case where each of the coded blocks located around the current block has one motion vector will be explained. FIGs. 3A and 3B show the positional relationship of the blocks to be referred to. FIG. 3A is an example where the block BL51 to be coded in direct mode is 16 × 16 pixels in size, and FIG. 3B is an example where the block BL52 to be coded in direct mode is 8 × 8 pixels in size. In either case, the motion vectors of the three blocks located in the positions A, B and C are referred to, as a rule. However, they are not referred to when the following rules are satisfied, and motion compensation is performed in direct mode with reference to the immediately preceding picture by considering the value of the motion vector of the current block as "0".
1. If a block A or B is outside a current picture or outside a slice.
2. If a block A or B has a motion vector of a value "0" referring to the immediately preceding picture.

Only the motion vectors referring to the immediately preceding picture are extracted from among the motion vectors of the three blocks for reference and the median or average thereof is calculated so as to determine the motion vector which is actually used for the direct mode. However, it is assumed that if the block C is not available for reference, the block D is used instead.

FIG. 4 shows an example of reference relationship of the motion vectors in the above case. It is assumed that the block BL51 belonging to the picture P64 is a current block to be coded. In this case, the motion vector referring to the immediately preceding picture is MVA1 only, so the value of MVA1 is used as it is for the value of the motion vector MV1 used for the direct mode. Note that the positional relationship of the blocks for reference are same even if other blocks than the blocks located in the positions A, B, C and D as shown in FIG. 3A and FIG. 3B are used.

The example of FIG. 4 shows a case where each of the coded blocks to be referred to has one motion vector. However, the prediction modes for B-pictures include the mode in which motion compensation is performed referring to two preceding pictures at a time. In such a mode, one block has two motion vectors.

Following is an explanation of a case where coded blocks located around a current block to be coded include blocks each of which has two motion vectors. FIG. 9 is a diagram showing an example of reference relationship of motion vectors in a case where coded blocks located around a current block include blocks each of which has two motion vectors. The picture P94 is a current picture to be coded, and the block BL51 is a block to be predictively coded in direct mode. Using the motion vectors MVA1, MVB1 and MVC1 referring to the picture P93 that is the immediately preceding picture in display order among the pictures referred to by all the motion vectors of the blocks for reference, the median or average value thereof is calculated so as to determine the motion vector MV1 used for direct mode predictive coding, and thus motion compensation is performed with reference only to the preceding picture.

As described above, the above-mentioned embodiment suggests a method for realizing the direct mode without referring to the subsequent pictures in display order for performing predictive coding in direct mode, even under the environment where the subsequent pictures in display order are not available for reference, and allows reduction of the number of items on the table for coding modes by eliminating the items on reference to subsequent pictures, so as to show a coding method for achieving high coding efficiency.

It should be noted that it is possible, for determining motion vectors used for the direct mode coding, to extract motion vectors referring to N number of preceding pictures so as to determine one motion vector for each reference picture and thus perform motion compensation with reference only to the preceding pictures using N number of motion vectors as motion vectors for direct mode predictive coding, instead of calculating one motion vector by extracting only the motion vectors referring to the immediately preceding picture in display order. In this case, a predictive image is generated by calculating the average of pixel values of N number of areas specified by N number of motion vectors. It is possible to generate a predictive image by calculating not the simple average but the weighted average of pixel values of respective areas. Use of this method makes it possible to realize highly accurate motion compensation for a sequence of images in which pixel values change gradually in display order.

FIG. 12 shows an example of motion vector reference method when N=2 in the above case. P104 is a current picture to be coded, and BL51 is a current block to be predictively coded in direct mode. The motion vector MV1 is determined by calculating the median or average of the motion vectors MVA1, MVB1 and MVC1 referring to the picture P103 that immediately precedes in display order among the pictures referred to by a plurality of motion vectors for reference, and further the motion vector MV2 is determined by calculating the median or average of the motion vectors referring to the picture P102 that precedes the current picture by two pictures, that is, MVC2 itself, and thus direct mode coding is performed using these two motion vectors.

It should be noted that it is possible to use the following rules, instead of the method described in the above embodiment, as a method for determining the blocks referred to by the motion vectors in FIG. 3A and FIG. 3B.
1. If A and D are not available for reference, they shall be referred to by considering their motion vectors as "0".
2. If B, C and D are not available for reference, only A shall be referred to.
3. If only C is not available for reference, A, B and D shall be referred to.
4. In other cases than the above 2 and 3, A, B and C shall be referred to.

It should be noted that it is also possible to determine a value of a motion vector for a current block used in direct mode by extracting only motion vectors referring to a specified picture and to perform motion compensation based on the specified picture, instead of a method in which only motion vectors referring to one or N number of preceding pictures in display order are used from among the motion vectors for the blocks referred to in FIG. 3A and FIG. 3B.

It should be noted that when coding in direct mode, it is also possible to perform motion compensation in direct mode by considering a value of a motion vector for a current block to be coded as "0" and the immediately preceding picture as a reference picture, instead of performing motion compensation with reference to the blocks located in the positions as shown in FIG. 3A and FIG. 3B. Use of this method makes it unnecessary to execute a step of calculating a motion vector used for the direct mode, and thus simplification of coding processing can be achieved.

It should also be noted that, in the above embodiment, motion vectors referring to the picture located closest to a current picture in display order, in the pictures referred to by motion vectors obtained with reference to three blocks, are extracted from among such motion vectors, but the present invention is not limited to that. For example, motion vectors referring to the picture located closest to a current picture in coding order may be extracted.

### (Fourth Embodiment)

A moving picture decoding method in the fourth embodiment of the present invention will be explained using the block diagram as shown in FIG. 13. It is assumed that the coded stream generated by the moving picture coding method in the third embodiment shall be inputted.

First, the coded stream analysis unit 201 extracts various types of information such as the motion vector information and the coded prediction error data from the inputted coded stream. Here, the extracted motion vector information is outputted to the motion compensation decoding unit 204 and the coded prediction error data is outputted to the prediction error decoding unit 202 respectively. The motion compensation decoding unit 204 generates a predictive image based on the inputted motion vector information, using decoded images of the decoded pictures stored in the frame memory 203 as reference pictures. In this case, the subsequent picture judgment unit 206 judges whether the subsequent pictures in display order have already been coded or not, and if it judges that the subsequent pictures have not yet been coded, selection of a prediction mode is limited so that the prediction modes in which the subsequent pictures in display order are not selected for coding B-pictures.

FIGs. 15A and 15B show examples of tables on which codes for identifying prediction modes for B-pictures are associated with their coding modes. If the prediction direction is not limited, a table as shown in FIG. 15A showing all the reference patterns is used, but if the prediction direction is limited to forward direction only, a table as shown in FIG. 15B which is remade by eliminating all the patterns of backward reference is referred to. Note that respective items in the tables in FIG. 15A and FIG. 15B can be handled in the same manner even if other values than the values indicated in these tables are used.

The predictive image generated as mentioned above is inputted to the addition unit 207, the inputted predictive image and the prediction error image generated by the prediction error decoding unit 202 are added, and then a decoded image is generated. When the prediction direction is not limited, the generated decoded images of pictures are reordered in display order in the frame memory 203, but when subsequent pictures in display order are not available for reference, it is possible to display the pictures in decoding order without reordering them. The above embodiment describes an operation performed for a coded stream which has been coded based on inter picture prediction, but it may be switched by the switch 208 into decoding processing for a coded stream which has been coded based on intra picture prediction.

That is an overview of the flow of decoding, and the processing performed in the motion compensation decoding unit 204 will be explained below in detail. However, it is considered here that the subsequent picture judgment unit 206 judges that the subsequent pictures have not yet been decoded.

The motion vector information is added per macroblock or per block that is a subdivision of a macroblock. A previously decoded picture is considered as a reference picture for a current macroblock to be decoded, and a predictive image is generated for motion compensation based on that reference picture using the decoded motion vector.

When the direct mode is instructed for prediction decoding of B-pictures under the environment where the subsequent pictures have not yet been decoded, the direct mode is realized by referring to the motion vectors of the decoded blocks in the vicinity of the current block to be decoded, instead of referring to the motion vectors of the immediately subsequent picture, as mentioned in the background art.

First, a case where each of the decoded blocks located in the vicinity of the current block has one motion vector will be explained. FIGs. 3A and 3B show the positional relationship of the blocks to be referred to. FIG. 3A is an example where the current block to be decoded BL51 is 16 × 16 pixels in size, and FIG. 3B is an example where the current block to be coded BL52 is 8 × 8 pixels in size. In either case, motion vectors of three blocks located in the positions A, B and C are referred to, as a rule. However, the motion vectors are not referred to when the following rules are satisfied, but motion compensation is performed in direct mode with reference to the immediately preceding picture by considering the value of the motion vector of the current block as "0":
1. The block A or B is outside a current picture or outside a slice.
2. The block A or B has a motion vector of a value "0" which refers to the immediately preceding picture.

A motion vector which is actually used for direct mode is determined by extracting only the motion vectors referring to the immediately preceding picture from among the motion vectors of the three blocks A, B and C used for reference and then calculating the median of the extracted motion vectors. However, when the block C is not available for reference, the motion vector for the block D is used instead.

FIG. 4 shows an example of reference relationship of the motion vectors in the above case. The block BL51 belonging to the picture P64 is assumed to be a current block to be decoded. In this example, only the motion vector MVA1 refers to the immediately preceding picture, and thus the value of the motion vector MVA1 is used as it is for the motion vector MV1 used in direct mode. Note that the positional relationship of the blocks to be referred to are same even if blocks located in other positions than A, B, C and D as shown in FIG. 3A and FIG. 3B are used.

The example of FIG. 4 shows a case where each of the decoded blocks to be referred to has one motion vector. However, the prediction modes for B-pictures include the mode in which motion compensation is performed referring to two preceding pictures at a time. In such a mode, one block has two motion vectors.

Following is an explanation of a case where decoded blocks located in the vicinity of a current block to be decoded include blocks each of which has two motion vectors. FIG. 9 is a diagram showing an example of reference relationship of motion vectors in such a case. The picture P94 is a current picture to be decoded, and the block BL51 is a block to be predictively decoded in direct mode. Using the motion vectors MVA1, MVB1 and MVC1 referring to the picture P93 that immediately precedes in display order among the pictures referred to by all the motion vectors of the blocks for reference, the median or average thereof is calculated so as to determine the motion vector MV1 used for direct mode prediction decoding, and thus motion compensation is performed with reference only to the preceding pictures.

As described above, the above embodiment suggests a method for realizing the direct mode without referring to the subsequent pictures in display order when predictive decoding is performed in direct mode, even under the environment where the subsequent pictures in display order are not available for reference, and allows reduction of the number of items on the table for coding modes by eliminating the items on reference to subsequent pictures so as to show a decoding method for achieving high coding efficiency.

It should be noted that it is possible, for determining motion vectors used for the direct mode decoding, to extract motion vectors referring to N number of preceding pictures, determine one motion vector for each reference picture and thus perform motion compensation with reference only to the preceding pictures using the obtained N number of motion vectors as motion vectors for direct mode predictive decoding, instead of calculating one motion vector by extracting only the motion vectors referring to the immediately preceding picture in display order from among the pictures referred to by the neighboring decoded blocks. In this case, a predictive image is generated by calculating the average of pixel values of N number of areas specified by N number of motion vectors. It is possible to generate a predictive image by calculating not the simple average but the weighted average of the pixel values of respective areas. Use of this method makes it possible to realize highly accurate motion compensation for a sequence of images in which pixel values change gradually in display order.

FIG. 12 shows an example of a motion vector reference method when N=2 in the above case. P104 is a current picture to be decoded, and BL51 is a current block to be predictively decoded in direct mode. The motion vector MV1 is determined by calculating the median or average of the motion vectors MVA1, MVB1 and MVC1 referring to the picture P103 that immediately precedes in display order among the pictures referred to by a plurality of motion vectors for reference, and further the motion vector MV2 is determined by calculating the median or average of the motion vectors referring to the picture P102 that precedes the current picture by two pictures, that is, MVC2 itself, and thus direct mode decoding is performed using these two motion vectors.

It should be noted that it is possible to use the following rules as a method for determining the blocks referred to by the motion vectors in FIG. 3A and FIG. 3B, instead of the method described in the above embodiment.
1. If A and D are not available for reference, they shall be referred to by considering their motion vectors as "0".
2. If B, C and D are not available for reference, only A shall be referred to.
3. If only C is not available for reference, A, B and D shall be referred to.
4. In other cases than the above 2 and 3, A, B and C shall be referred to.

It should be noted that it is also possible to determine a value of a motion vector for a current block used in direct mode by extracting only motion vectors referring to a specified picture and perform motion compensation based on the specified picture, instead of a method in which only motion vectors referring to one or N number of preceding pictures in display order are used from among the motion vectors for the blocks referred to in FIG. 3A and FIG. 3B.

It should be noted that when decoding in direct mode, it is also possible to perform motion compensation in direct mode by considering a value of a motion vector for a current block to be decoded as "0" and the immediately preceding picture as a reference picture, instead of performing motion compensation with reference to the blocks located in the positions as shown in FIG. 3A and FIG. 3B. Use of this method makes it unnecessary to execute a step of calculating a motion vector used for the direct mode, and thus simplification of coding processing can be achieved.

### (Fifth Embodiment)

In addition, if a program for realizing the moving picture coding method or the moving picture decoding method as shown in the above embodiments is recorded on a recording medium such as a flexible disk, it becomes possible to perform the processing as shown in the above embodiments easily in an independent computer system.

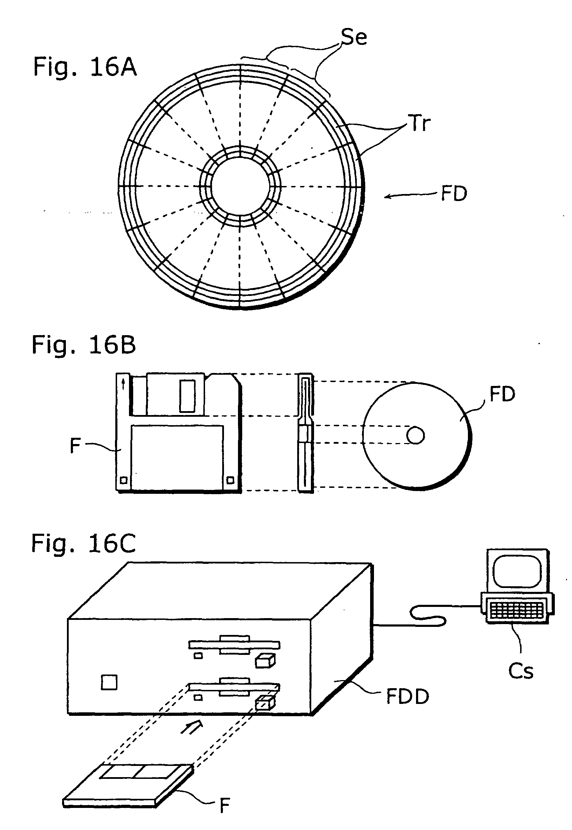

FIGs. 16A, 16B and 16C are illustrations showing the case where the moving picture coding method or the moving picture decoding method in the above embodiments are performed in a computer system using a flexible disk storing the method.

FIG. 16B shows a front view of an appearance of a flexible disk and a cross-sectional view thereof, and the flexible disk itself, and FIG. 16A shows an example of a physical format of the flexible disk as a recording medium body. The flexible disk FD is contained in a case F, and a plurality of tracks Tr are formed concentrically on the surface of the disk in the radius direction from the periphery to the inside, and each track is divided into 16 sectors Se in the angular direction. Therefore, as for the flexible disk storing the above-mentioned program, the moving picture coding method as the above program is recorded in an area allocated for it on the flexible disk FD.

Fig. 16C shows a structure for recording and reproducing the program on and from the flexible disk FD. When the program is recorded on the flexible disk FD, the program as the moving picture coding method or the moving picture decoding method is written in the flexible disk from the computer system Cs via a flexible disk drive. When the above moving picture coding method is constructed in the computer system by the program on the flexible disk, the program is read out from the flexible disk using the flexible disk drive and transferred to the computer system.

The above explanation is made on the assumption that a recording medium is a flexible disk, but the same processing can also be performed using an optical disk. In addition, the recording medium is not limited to a flexible disk and an optical disk, but the same processing can be performed using any other medium such as an IC card and a ROM cassette capable of recording a program.

### (Sixth Embodiment)

Furthermore, applications of the moving picture coding method and the moving picture decoding method as shown in the above embodiments and the systems using these methods will be explained.

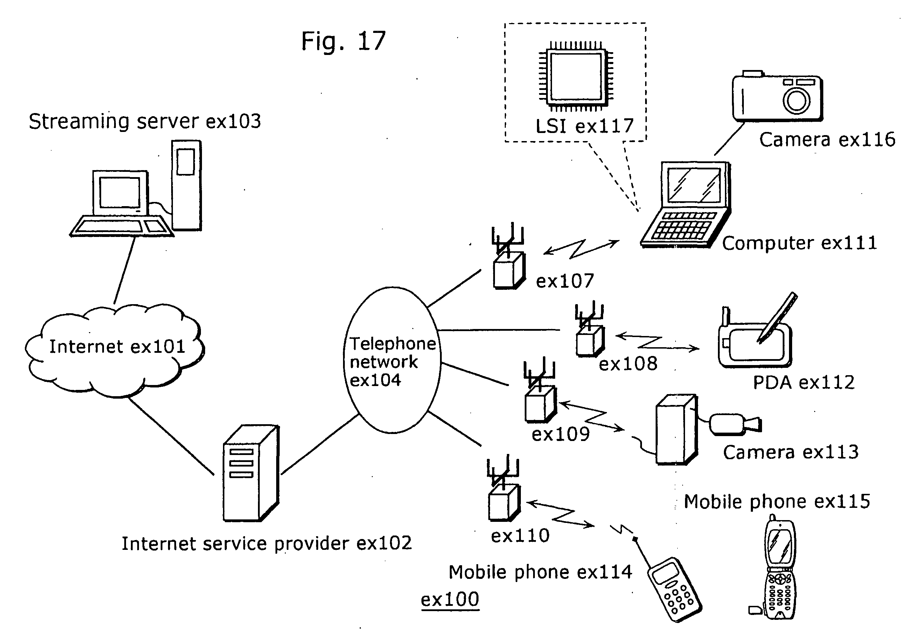

Fig. 17 is a block diagram showing the overall configuration of a content supply system ex100 for realizing content distribution services. The area for providing communication services is divided into cells of desired size, and base stations ex107∼ex110 that are fixed wireless stations are placed in respective cells.

In this content supply system ex100, devices such as a computer ex111, a personal digital assistant (PDA) ex112, a camera ex113, a mobile phone ex114 and a camera-equipped mobile phone ex115 are connected to the Internet ex 101 via an Internet service provider ex102, a telephone network ex104 and base stations ex107 ∼ex110.

However, the content supply system ex100 is not limited to the configuration as shown in Fig. 17, and any combinations of them may be connected to each other. Also, each device may be connected directly to the telephone network ex104, not through the base stations ex107∼ex110.

The camera ex113 is a device such as a digital video camera capable of shooting moving pictures. The mobile phone may be a mobile phone of a personal digital communications (PDC) system, a code division multiple access (CDMA) system, a wideband-code division multiple access (W-CDMA) system or a global system for mobile communications (GSM) system, a personal handyphone system (PHS) or the like, and any of them can be used.

A streaming server ex103 is connected to the camera ex113 via the base station ex109 and the telephone network ex104, which allows live distribution or the like using the camera ex113 based on the coded data transmitted from a user. Either the camera ex113 or the server or the like for transmitting the data may code the shot data. Also, the moving picture data shot by a camera ex116 may be transmitted to the streaming server ex103 via the computer ex111. The camera ex116 is a device such as a digital camera capable of shooting still and moving pictures. In this case, either the camera ex116 or the computer ex111 may code the moving picture data. An LSI ex117 included in the computer ex111 or the camera ex116 actually performs coding processing. Software for coding and decoding pictures may be integrated into any types of storage mediums (such as a CD-ROM, a flexible disk and a hard disk) that are recording mediums which are readable by the computer ex111 or the like. Furthermore, the camera-equipped mobile phone ex115 may transmit the moving picture data. This moving picture data is the data coded by the LSI included in the mobile phone ex115.

In this content supply system ex100, contents (such as a music live video) shot by users using the camera ex113, the camera ex116 or the like are coded in the same manner as the above embodiments and transmitted to the streaming server ex103, while the streaming server ex103 makes stream distribution of the contents data to the clients at their requests. The clients include the computer ex111, the PDA ex112, the camera ex113, the mobile phone ex114 and so on capable of decoding the above-mentioned coded data. In the content supply system ex100, the clients can thus receive and reproduce the coded data, and further the clients can receive, decode and reproduce the data in real time so as to realize personal broadcasting.

When each device in this system performs coding or decoding, the moving picture coding apparatus or the moving picture decoding apparatus, as shown in each of the above-mentioned embodiments, can be used.

A mobile phone will be explained as an example of such a device.

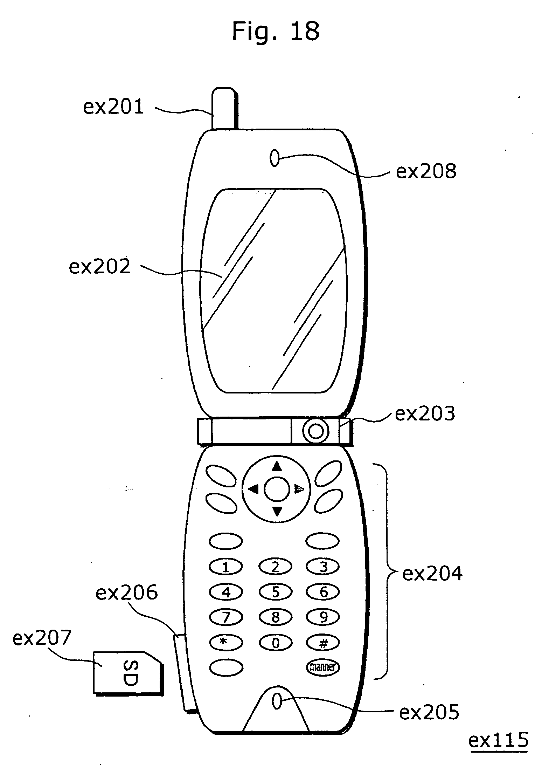

Fig. 18 is a diagram showing the mobile phone ex115 that uses the moving picture coding method and the moving picture decoding method which have been explained in the above embodiments. The mobile phone ex115 has: an antenna ex201 for sending and receiving radio waves to and from the base station ex110; a camera unit ex203 such as a CCD camera capable of shooting video and still pictures; a display unit ex202 such as a liquid crystal display for displaying the data obtained by decoding video and the like shot by the camera unit ex203 and received via the antenna ex201; a body unit including a set of operation keys ex204; a voice output unit ex208 such as a speaker for outputting voices; a voice input unit 205 such as a microphone for inputting voices; a storage medium ex207 for storing coded or decoded data such as data of shot moving or still pictures, data of received e-mail, data of moving or still pictures; and a slot unit ex206 for attaching the storage medium ex207 to the mobile phone ex115. The storage medium ex207 includes a flash memory element, a kind of EEPROM (Electrically Erasable and Programmable Read Only Memory) that is an electrically erasable and rewritable nonvolatile memory, in a plastic case such as an SD card.

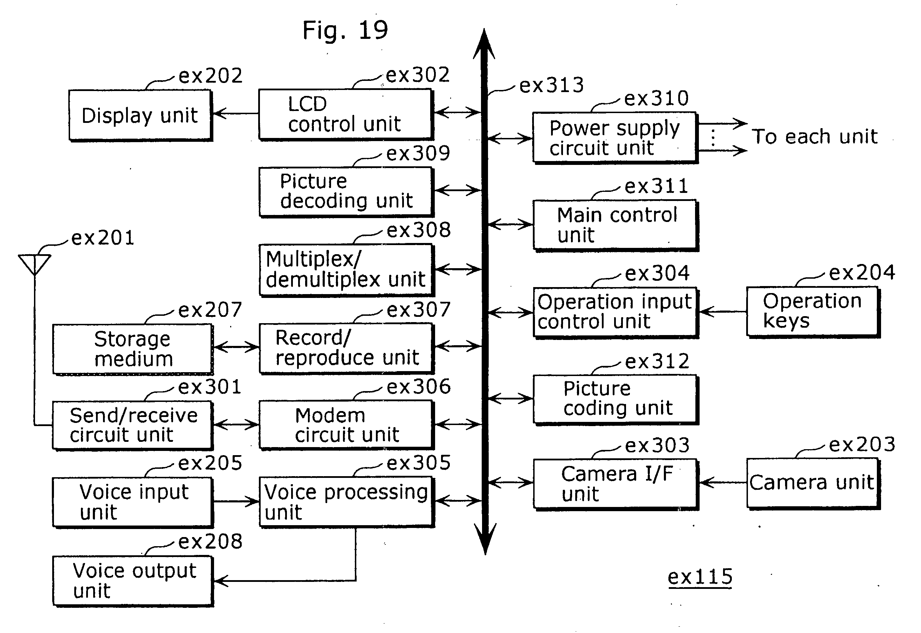

The mobile phone ex115 will be further explained with reference to Fig. 19. In the mobile phone ex115, a power supply circuit unit ex310, an operation input control unit ex304, a picture coding unit ex312, a camera interface unit ex303, an LCD (Liquid Crystal Display) control unit ex302, a picture decoding unit ex309, a multiplex/demultiplex unit ex308, a record/reproduce unit ex307, a modem circuit unit ex306 and a voice processing unit ex305 are connected to a main control unit ex311 for overall controlling each of the display unit ex202 and the body unit including operation keys ex204 with each other via a synchronous bus ex313.

When a call-end key or a power key is turned ON by a user's operation, the power supply circuit unit ex310 supplies respective units with power from a battery pack so as to activate the camera-equipped digital mobile phone ex115 for making it into a ready state.

In the mobile phone ex115, the voice processing unit ex305 converts the voice signals received by the voice input unit ex205 in voice conversation mode into digital voice data under the control of the main control unit ex311 including a CPU, ROM and RAM or the like, the modem circuit unit ex306 performs spread spectrum processing of the digital voice data, and the send/receive circuit unit ex301 performs digital-to-analog conversion and frequency transform of the data, so as to transmit it via the antenna ex201. Also, in the mobile phone ex115, after the data received by the antenna ex201 in voice conversation mode is amplified and performed of frequency transform and analog-to-digital conversion, the modem circuit unit ex306 performs inverse spread spectrum processing of the data, and the voice processing unit ex305 converts it into analog voice data, so as to output it via the voice output unit 208.

Furthermore, when transmitting e-mail in data communication mode, the text data of the e-mail inputted by operating the operation keys ex204 on the body unit is sent out to the main control unit ex311 via the operation input control unit ex304. After the modem circuit unit ex306 performs spread spectrum processing of the text data and the send/receive circuit unit ex301 performs digital-to-analog conversion and frequency transform for it, the main control unit ex311 transmits the resulting data to the base station ex110 via the antenna ex201.

When picture data is transmitted in data communication mode, the picture data shot by the camera unit ex203 is supplied to the picture coding unit ex312 via the camera interface unit ex303. When the picture data is not transmitted, it is also possible to display the picture data shot by the camera unit ex203 directly on the display unit 202 via the camera interface unit ex303 and the LCD control unit ex302.

The picture coding unit ex312, which includes the moving picture coding apparatus as explained in the present invention, compresses and codes the picture data supplied from the camera unit ex203 by the coding method used for the moving picture coding apparatus as shown in the above embodiments so as to transform it into coded picture data, and sends it out to the multiplex/demultiplex unit ex308. At this time, the mobile phone ex115 sends out the voices received by the voice input unit ex205 during shooting by the camera unit ex203 to the multiplex/demultiplex unit ex308 as digital voice data via the voice processing unit ex305.

The multiplex/demultiplex unit ex308 multiplexes the coded picture data supplied from the picture coding unit ex312 and the voice data supplied from the voice processing unit ex305 by a predetermined method, the modem circuit unit ex306 performs spread spectrum processing of the multiplexed data obtained as a result of the multiplexing, and the send/receive circuit unit ex301 performs digital-to-analog conversion and frequency transform on the data for transmitting via the antenna ex201.

As for receiving data of a moving picture file which is linked to a Web page or the like in data communication mode, the modem circuit unit ex306 performs inverse spread spectrum processing on the data received from the base station ex110 via the antenna ex201, and sends out the multiplexed data obtained as a result of the processing to the multiplex/demultiplex unit ex308.

In order to decode the multiplexed data received via the antenna ex201, the multiplex/demultiplex unit ex308 separates the multiplexed data into a bit stream of picture data and a bit stream of voice data, and supplies the coded picture data to the picture decoding unit ex309 and the voice data to the voice processing unit ex305 respectively via the synchronous bus ex313.

Next, the picture decoding unit ex309, which includes the picture decoding apparatus as explained in the present invention, decodes the bit stream of picture data by the decoding method corresponding to the coding method as shown in the above-mentioned embodiments to generate reproduced moving picture data, and supplies this data to the display unit ex202 via the LCD control unit ex302, and thus moving picture data included in a moving picture file linked to a Web page, for instance, is displayed. At the same time, the voice processing unit ex305 converts the voice data into analog voice data, and supplies this data to the voice output unit ex208, and thus voice data included in a moving picture file linked to a Web page, for instance, is reproduced.

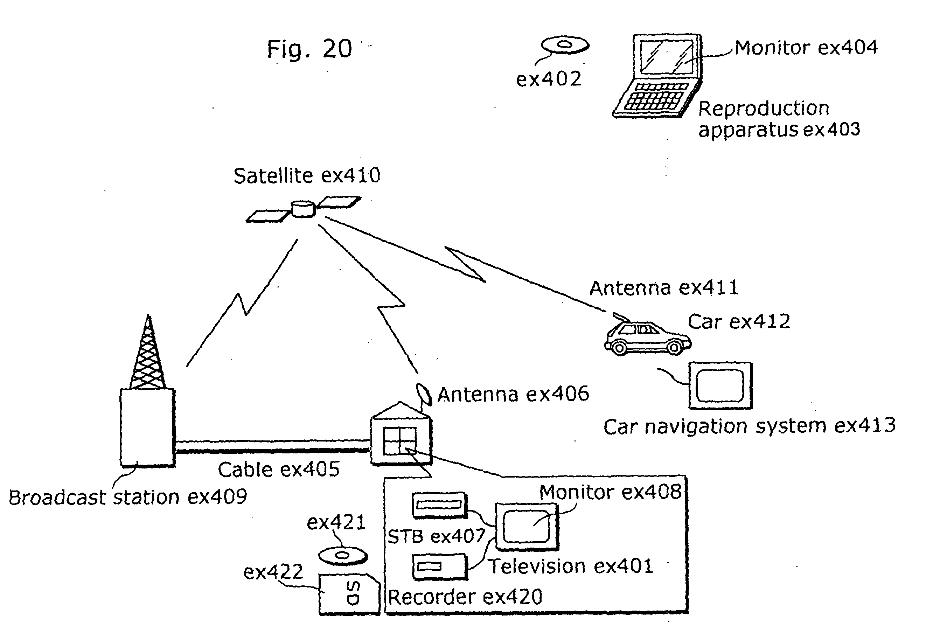

The present invention is not limited to the above-mentioned system, and at least either the moving picture coding apparatus or the moving picture decoding apparatus in the above-mentioned embodiments can be incorporated into a system for digital broadcasting as shown in Fig. 20. Such ground-based or satellite digital broadcasting has been in the news lately. More specifically, a bit stream of video information is transmitted from a broadcast station ex409 to or communicated with a broadcast satellite ex410 via radio waves. Upon receipt of it, the broadcast satellite ex410 transmits radio waves for broadcasting, a home-use antenna ex406 with a satellite broadcast reception setup receives the radio waves, and a device such as a television (receiver) ex401 or a set top box (STB) ex407 decodes the bit stream for reproduction. The moving picture decoding apparatus as shown in the above-mentioned embodiments can be implemented in the reproduction apparatus ex403 for reading off and decoding the bit stream recorded on a storage medium ex402 that is a recording medium such as a CD and DVD. In this case, the reproduced video signals are displayed on a monitor ex404. It is also conceived to implement the moving picture decoding apparatus in the set top box ex407 connected to a cable ex405 for a cable television or the antenna ex406 for satellite and/or ground-based broadcasting so as to reproduce them on a monitor ex408 of the television. The moving picture decoding apparatus may be incorporated into the television, not in the set top box. Or, a car ex412 having an antenna ex411 can receive signals from the satellite ex410, the base station ex107 or the like for reproducing moving pictures on a display device such as a car navigation system ex413.

Furthermore, the moving picture coding apparatus as shown in the above-mentioned embodiments can code picture signals for recording them on a recording medium. As a concrete example, there is a recorder ex420 such as a DVD recorder for recording picture signals on a DVD disc ex421 and a disk recorder for recording them on a hard disk. They can be recorded on an SD card ex422. If the recorder ex420 includes the moving picture decoding apparatus as shown in the above-mentioned embodiments, the picture signals recorded on the DVD disc ex421 or the SD card ex422 can be reproduced for display on the monitor ex408.

As a structure of the car navigation system ex413, the structure without the camera unit ex203, the camera interface unit ex303 and the picture coding unit ex312, out of the units shown in Fig. 19, can be conceived. The same applies to the computer ex111, the television (receiver) ex401 and others.

In addition, three types of implementations can be conceived for a terminal such as the above-mentioned mobile phone ex114; a sending/receiving terminal including both an encoder and a decoder, a sending terminal including an encoder only, and a receiving terminal including a decoder only.

As described above, it is possible to use the moving picture coding method or the moving picture decoding method as shown in the above-mentioned embodiments in any of the above-mentioned apparatuses and systems, and using this method, the effects described in the above embodiments can be obtained.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

### Industrial Applicability

The moving picture coding apparatus according to the present invention is of value as a moving picture coding apparatus included in a personal computer, a PDA, a digital broadcast station, a mobile phone, and the like with communication capability.

Also, the moving picture decoding apparatus according to the present invention is of value as a moving picture decoding apparatus included in a personal computer, a PDA, an STB for receiving digital broadcast, a mobile phone, and the like with communication capability.

## Claims

1. A moving picture coding method for coding a moving picture to generate a coded stream, comprising a coding step of allowing use of a direct mode for coding a B-picture which is predictively coded with reference to a plurality of temporally preceding or subsequent coded pictures, the direct mode being a mode for performing motion compensation of a current block to be coded with reference to motion vectors of coded blocks,
wherein the coding step includes a motion compensation step of performing motion compensation, as in the direct mode, with reference to the motion vectors of the coded blocks located around the current block to be coded in one picture, when the B-picture is predictively coded with reference only to the coded pictures located in one direction, in display order, of the picture including the current block to be coded.

2. The moving picture coding method according to Claim 1,
wherein in the motion compensation step, the motion compensation is performed when all the coded pictures which are referred to for performing the predictive coding are pictures that temporally precede the picture including the current block to be coded.

3. The moving picture coding method according to Claim 1,
wherein in the motion compensation step, the motion compensation is performed when none of the coded pictures are available for reference for performing the predictive coding, said coded pictures being temporally subsequent to the picture including the current block to be coded.

4. The moving picture coding method according to Claim 1,
wherein the motion compensation step includes a motion vector calculation step of calculating a motion vector of the current block to be coded, by referring to one or more motion vectors of the coded blocks, said motion vectors referring to one or more of the plurality of pictures in order of temporal proximity to the picture including the current block to be coded, and by calculating a median or an average of said motion vectors, when the motion compensation is performed, and
in the motion compensation step, the motion compensation is performed in direct mode using said one or more motion vectors obtained in the motion vector catenation step.

5. The moving picture coding method according to Claim 4,
wherein in the motion vector calculation step, the motion vector is calculated with reference to motion vectors of the coded blocks, said motion vectors referring to one or more of the plurality of pictures in order of proximity in display order to the picture including the current block to be coded.

6. The moving picture coding method according to Claim 1,
wherein in the motion compensation step, the motion compensation is performed with reference to one or more of the pictures in order of temporal proximity by considering a value of a motion vector of the current block to be coded as "0" in one of the following cases, when the motion compensation is performed: any of the coded blocks are located outside the picture or a slice including the current block to be coded; values of any of the motion vectors of the coded blocks are "0"; and any of the coded blocks have no motion vector.

7. A moving picture coding method for coding a moving picture to generate a coded stream, comprising a coding step of allowing use of a direct mode for coding a B-picture which is predictively coded with reference to a plurality of temporally preceding or subsequent coded pictures, the direct mode being a mode for performing motion compensation of a current block to be coded with reference to motion vectors of coded blocks,
wherein in the coding step, motion compensation is performed, as in the direct mode, with reference to one or more of the plurality of the pictures in order of temporal proximity by considering a value of a motion vector of the current block to be coded as "0", when the B-picture is predictively coded with reference only to the coded pictures located in one direction, in display order, of a picture including the current block to be coded.

8. The moving picture coding method according to any one of Claim 1 to Claim 7,
wherein the coding step includes a table regeneration step of regenerating a table by eliminating a predictive coding method for backward reference from a table in which predictive coding methods for the B-picture are associated with identifiers for identifying the predictive coding methods, and
in the coding step, an identifier indicating a predictive coding method for the B-picture is coded using the regenerated table.

9. A moving picture decoding method for decoding a coded stream obtained by coding a moving picture, comprising a decoding step of allowing use of a direct mode for decoding a B-picture which is predictively decoded with reference to a plurality of temporally preceding or subsequent decoded pictures, the direct mode being a mode for performing motion compensation of a current block to be decoded with reference to motion vectors of decoded blocks,
wherein the decoding step includes a motion compensation step of performing motion compensation, as in the direct mode, with reference to the motion vectors of the decoded blocks located around the current block to be decoded in one picture, when the B-picture is predictively decoded with reference only to the decoded pictures located in temporally one direction of said picture including the current block to be decoded.

10. The moving picture decoding method according to Claim 9,
wherein in the motion compensation step, the motion compensation is performed when all the decoded pictures which are referred to for performing the predictive decoding are pictures that temporally precede the picture including the current block to be decoded.

11. The moving picture decoding method according to Claim 9,
wherein in the motion compensation step, the motion compensation is performed when none of the decoded pictures are available for reference for performing the predictive decoding, said decoded pictures being temporally subsequent to the picture including the current block to be decoded.

12. The moving picture decoding method according to Claim 9,
wherein the motion compensation step includes a motion vector calculation step of calculating a motion vector of the current block to be decoded, by referring to one or more motion vectors of the decoded blocks, said motion vectors referring to one or more of the plurality of pictures in order of temporal proximity to the picture including the current block to be decoded, and by calculating a median or an average of said motion vectors, when the motion compensation is performed, and
in the motion compensation step, the motion compensation is performed in direct mode using said one or more motion vectors obtained in the motion vector calculation step.

13. The moving picture decoding method according to Claim 12,
wherein in the motion vector calculation step, the motion vector is calculated with reference to motion vectors of the decoded blocks, said motion vectors referring to one or more of the plurality of pictures in order of proximity in display order to the picture including the current block to be decoded.

14. The moving picture decoding method according to Claim 9,
wherein in the motion compensation step, the motion compensation is performed with reference to one or more of the pictures in order of temporal proximity by considering a value of a motion vector of the current block to be decoded as "0" in one of the following cases, when the motion compensation is performed: any of the decoded blocks are located outside the picture or a slice including the current block to be decoded; values of any of the motion vectors of the decoded blocks are "0"; and any of the decoded blocks have no motion vector.

15. A moving picture decoding method for decoding a coded stream obtained by coding a moving picture, comprising a decoding step of allowing use of a direct mode for decoding a B-picture which is predictively decoded with reference to a plurality of temporally preceding or subsequent decoded pictures, the direct mode being a mode for performing motion compensation of a current block to be decoded with reference to motion vectors of decoded blocks,
wherein in the decoding step, motion compensation is performed, as in the direct mode, with reference to one or more of the plurality of the pictures in order of temporal proximity by considering a value of a motion vector of the current block to be decoded as "0", when the B-picture is predictively coded with reference only to the decoded pictures located in temporally one direction of a picture including the current block to be decoded.

16. The moving picture decoding method according to any one of Claim 9 to Claim 15,
wherein the decoding step includes a table regeneration step of regenerating a table by eliminating a predictive decoding method for backward reference from a table in which predictive decoding methods for the B-picture are associated with identifiers for identifying the predictive decoding methods, and
in the decoding step, an identifier for identifying a predictive decoding method for the B-picture in the coded stream is decoded, the predictive decoding method for said B-picture is identified using the regenerated table, and the current block to be decoded is predictively decoded according to the identified predictive decoding method.

17. A moving picture coding apparatus for coding a moving picture to generate a coded stream, comprising a coding unit operable to allow use of a direct mode for coding a B-picture which is predictively coded with reference to a plurality of temporally preceding or subsequent coded pictures, the direct mode being a mode for performing motion compensation of a current block to be coded with reference to motion vectors of coded blocks,
wherein the coding unit includes a motion compensation unit operable to perform motion compensation, as in the direct mode, with reference to the motion vectors of the coded blocks located around the current block to be coded in one picture, when the B-picture is predictively coded with reference only to the coded pictures located in temporally one direction of the picture including the current block to be coded.

18. A moving picture decoding apparatus for decoding a coded stream obtained by coding a moving picture, comprising a decoding unit operable to allow use of a direct mode for decoding a B-picture which is predictively decoded with reference to a plurality of temporally preceding or subsequent decoded pictures, the direct mode being a mode for performing motion compensation of a current block to be decoded with reference to motion vectors of decoded blocks,
wherein the decoding unit includes a motion compensation unit operable to perform motion compensation, as in the direct mode, with reference to the motion vectors of the decoded blocks located around the current block to be decoded in one picture, when the B-picture is predictively decoded with reference only to the decoded pictures located in temporally one direction of the picture including the current block to be decoded.

19. A data recording medium for storing a program for causing a computer to execute each of the steps included in either the moving picture coding method or the moving picture decoding method according to any one of Claim 1 to Claim 16.

20. A program for causing a computer to execute each of the steps included in either the moving picture coding method or the moving picture decoding method according to any one of Claim 1 to Claim 16.

21. A coded data stream that contains header portions and data portions which are arranged alternately for each of slices that make up a picture,
wherein when a B-picture is predictively coded in direct mode with reference only to coded pictures located in temporally one direction of a picture including a current block to be coded, said B-picture being predictively coded with reference to a plurality of temporally preceding or subsequent coded pictures, one of the following flags is placed in the header portion of each slice: a flag indicating that motion compensation is performed with reference to motion vectors of a plurality of coded blocks located around the current block to be coded in one picture; and a flag indicating that motion compensation is performed by considering a value of a motion vector of the current block to be coded as "0", and
coded moving picture data obtained by the moving picture coding method according to any one of Claim 1 to Claim 8 is placed in the data portion of said each slice.
